# EUROPEAN PATENT APPLICATION

(11) **EP 3 173 246 A1**
(43) Date of publication of application: **31.05.2017**
(21) Application number: 15196920.1
(22) Date of filing: 30.11.2015
(51) Int. Cl.: B41M 3/00, B41M 7/00, C09D 11/101, C09D 11/50, B41M 5/323, B41M 5/333, B41M 5/34

(54) **INKJET INK SET FOR A METHOD OF MANUFACTURING A PACKAGING**

(71) Applicant: Agfa Graphics NV, 2640 Mortsel (BE)
(72) Inventor: LOCCUFIER, Johan, 2640 Mortsel (BE); GOETHALS, Fabienne, 2640 Mortsel (BE); VAN AERT, Hubertus, 2640 Mortsel (BE); KOKKELENBERG, Dirk, 2640 Mortsel (BE)
(74) Representative: Strijckers, Hans Louis P.

(57) **Abstract**

A method for manufacturing a packaging (1, 9) including the steps of: jetting one or more free radical UV curable pigmented colour inkjet inks from an inkjet ink set on the packaging (2); UV curing the one or more jetted free radical UV curable pigmented colour inkjet inks; jetting at least one colour forming inkjet ink from the inkjet ink set on the packaging or on the one or more UV cured free radical UV curable pigmented colour inkjet inks; and forming a colour image (10, 11) by a heat treatment (8) of the at least one jetted colour forming inkjet ink. Suitable inkjet ink sets are also described.

## Description

### Technical Field

The present invention relates to inkjet ink sets and methods for manufacturing a packaging, more specifically food, drink and pharmaceutical packaging.

### Background Art

Inkjet printing systems are increasingly replacing offset and flexography in packaging applications, as their enhanced reliability allows direct incorporation into manufacturing lines of packaging. The variable data printing capacity of inkjet makes short production runs possible and eliminates the need for stocks and logistics of timely ordered printed packaging materials.

However, sometimes all information for printing is not available at the time the packaging is inkjet printed. For example, the expiration date of food stuff and the production batch number of a pharmaceutical for traceability only becomes available upon the filling of the packaging with the foodstuff or the pharmaceutical.

One solution is to include in the manufacturing line a second inkjet printing system for applying on the packaging the expiration date or the batch number, but this represents often a complex and expensive solution or otherwise deteriorates the aesthetics and the appeal of the packaging.

Another solution is to position the inkjet system after the filling of the packaging with the food or pharmaceutical product. But often transparent materials, e.g. PET bottles, are used as packaging for inkjet printing thereon UV curable low migration inkjet inks, such as those exemplified by EP 2053101 A (AGFA) and WO 2015/148094 (SUN CHEMICAL), wherein the UV curing step may have a detrimental effect on the quality of the product. UV radiation is known to destroy vitamins in fruit juice or to inactivate some pharmaceutical drugs.

Hence, there is still a need for improved methods of manufacturing packaging by inkjet printing where all information to be inkjet printed is not available at the time when the packaging is inkjet printed;

### Summary of invention

In order to overcome the problems described above, preferred embodiments of the present invention have been realised with an inkjet ink set including one or more free radical UV curable pigmented colour inkjet inks and one or more colour forming inkjet inks capable of forming a colour upon a heat treatment.

The one or more free radical UV curable pigmented colour inkjet inks are used for printing an image on the packaging material, wherein the image lacks some information, like an expiration date or a batch code. The one or more colour forming inkjet inks capable of forming a colour upon a heat treatment are printed at the same time or in the same inkjet printing device. When the packaging is filled with its content, the information of the expiration date and the batch code becomes available. The area printed on the packaging by the one or more colour forming inkjet inks capable of forming a colour upon a heat treatment are then provided with the information by means of a heat treatment, preferably by an infrared laser.

The colour formed by the one or more colour forming inkjet inks may form a black colour on a white background so that, for example, a barcode or QR code is easily machine readable when it is scanned in a supermarket or a pharmacy. Alternatively, it may have a colour compatible with the rest of the printed packaging to provide a more appealing aesthetical look.

Further embodiments and advantages of the present invention will become apparent from the following description.

### Brief description of drawings

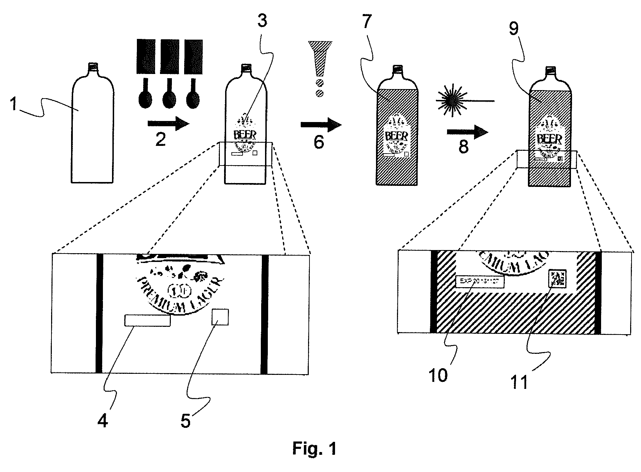

Figure 1 discloses a preferred embodiment of the method for manufacturing a packaging. An empty bottle (1) is inkjet printed (2) with one or more free radical UV curable pigmented colour inkjet inks and one or more colour forming inkjet inks to form an inkjet printed image (3) containing a box for the expiration code (4) and a box for expiration date (4) and a box for a QR code (5). The inkjet printed empty bottle is filled (7) with a drinking liquid having a certain expiration date. The filled bottle (7) is given a heat treatment (8) using an infrared laser for forming a colour image including the expiration date (10) and a QR code (11) thereby forming a coded filled bottle (9) which van be capped and shipped to a consumer.

### Description of embodiments

### Definitions

The term "monofunctional polymerizable compound" means that the polymerizable compound includes one polymerizable group.

The term "difunctional polymerizable compound" means that the polymerizable compound includes two polymerizable groups.

The term "polyfunctional polymerizable compound" means that the polymerizable compound includes more than two polymerizable groups.

The term "alkyl" means all variants possible for each number of carbon atoms in the alkyl group i.e. methyl, ethyl, for three carbon atoms: n-propyl and isopropyl; for four carbon atoms: n-butyl, isobutyl and tertiary-butyl; for five carbon atoms: n-pentyl, 1,1-dimethyl-propyl, 2,2-dimethylpropyl and 2-methyl-butyl, etc.

Unless otherwise specified a substituted or unsubstituted alkyl group is preferably a C₁ to C₆-alkyl group.

Unless otherwise specified a substituted or unsubstituted alkenyl group is preferably a C₁ to C₆-alkenyl group.

Unless otherwise specified a substituted or unsubstituted alkynyl group is preferably a C₁ to C₆-alkynyl group.

Unless otherwise specified a substituted or unsubstituted aralkyl group is preferably a phenyl or naphthyl group including one, two, three or more C₁ to C₆-alkyl groups.

Unless otherwise specified a substituted or unsubstituted alkaryl group is preferably a C₇ to C₂₀-alkyl group including a phenyl group or naphthyl group.

Unless otherwise specified a substituted or unsubstituted aryl group is preferably a phenyl group or naphthyl group

Unless otherwise specified a substituted or unsubstituted heteroaryl group is preferably a five- or six-membered ring substituted by one, two or three oxygen atoms, nitrogen atoms, sulphur atoms, selenium atoms or combinations thereof.

The term "substituted", in e.g. substituted alkyl group means that the alkyl group may be substituted by other atoms than the atoms normally present in such a group, i.e. carbon and hydrogen. For example, a substituted alkyl group may include a halogen atom or a thiol group. An unsubstituted alkyl group contains only carbon and hydrogen atoms

Unless otherwise specified a substituted alkyl group, a substituted alkenyl group, a substituted alkynyl group, a substituted aralkyl group, a substituted alkaryl group, a substituted aryl and a substituted heteroaryl group are preferably substituted by one or more constituents selected from the group consisting of methyl, ethyl, n-propyl, isopropyl, n-butyl, isobutyl and tertiary-butyl, ester, amide, ether, thioether, ketone, aldehyde, sulfoxide, sulfone, sulfonate ester, sulphonamide, -Cl, -Br, -I, -OH, -SH, - CN and -NO₂.

### Manufacturing Methods of Packaging

A method for manufacturing a packaging according to a preferred embodiment of the present invention includes the steps of: jetting one or more free radical UV curable pigmented colour inkjet inks from an inkjet ink set on the packaging; UV curing the one or more jetted free radical UV curable pigmented colour inkjet inks; jetting at least one colour forming inkjet ink from the inkjet ink set on the packaging or on the one or more UV cured free radical UV curable pigmented colour inkjet inks; and forming a colour image by a heat treatment of the at least one jetted colour forming inkjet ink.

In a preferred embodiment where the colour forming inkjet inks are aqueous colour forming inkjet inks that are not UV curable, the method for manufacturing a packaging includes the steps, in order, of: a) jetting one or more free radical UV curable pigmented colour inkjet inks from an inkjet ink set on the packaging; b) UV curing the one or more jetted free radical UV curable pigmented colour inkjet inks; c) jetting one or more aqueous colour forming inkjet inks from the inkjet ink set on the packaging or on the one or more UV cured free radical UV curable pigmented colour inkjet inks; and d) forming a colour image by a heat treatment of the one or more jetted aqueous colour forming inkjet inks.

In a preferred embodiment where the colour forming inkjet inks are free radical UV curable, the method for manufacturing a packaging includes the steps, in order, of: a) jetting one or more free radical UV curable pigmented colour inkjet inks and one or more free radical UV curable colour forming inkjet inks on the packaging; b) UV curing the one or more jetted free radical UV curable pigmented colour inkjet inks and the one ore more free radical UV curable colour forming inkjet inks; and c) forming a colour image by a heat treatment of the one or more jetted aqueous colour forming inkjet inks. It should be clear that UV curing between the jetting of the free radical UV curable inkjet inks is allowed to improve the image quality.

The heat treatment may be performed by direct heating, e.g. by a hot stamp, but is preferably performed by infrared radiation, more preferably by an infrared laser; the latter is capable of providing higher resolution images.

In a preferred embodiment of the method for manufacturing a packaging, the UV curing is performed using UV LEDs having an emission between 350 nm and 400 nm. By using these UV LEDs, the energy consumption can be reduced compared to UV curing with mercury lamps. Low energy consumption for manufacturing a packaging is seen as an important advantage in an industrial environment. In addition, mercury lamps tend to produce more heat than UV LEDs, which can cause undesired colour formation in a UV cured free radical curable colour forming inkjet ink.

In the present invention, an image may contain graphical data and/or information. The term "graphical data" means any graphical representation, e.g. a picture, a drawing, a logo, etc. The term "information" means any alphanumeric data, e.g. text, a name, a code, etc.

A directly visible image is obtained by jetting and UV curing the one or more free radical UV curable pigmented colour inkjet inks. With the colour forming inkjet inks, an image becomes only visible after a heat treatment.

### Packaging

There is no real limitation on the type of substrate used for the packaging. The substrates for inkjet printing may have plastic, glass or metal surfaces or may have a surface containing cellulosic fibres, such as paper and card board. The substrate may be an unprimed substrate but may also be a primed substrate, e.g. by a white primer.

The advantages are especially obtained for those types of packaging where traceability and serialization come into play.

Traceability is a major concern, and often a requirement for the medical and pharmaceutical community. In the event of a product recall, public safety and health are at risk. Manufacturers need the ability to quickly and positively identify and isolate all suspect products in the supply chain. Traceability is important for a packaging selected from the group consisting of food packaging, drink packaging, cosmetical packaging and medical packaging,

The basics of serialization (lot codes, batch codes, item numbers, time and date stamp) enable traceability from origination at the point of manufacture to the end of the supply chain. This data can be in the form of human readable text or through the use of coding, such as bar codes and QR codes, which aids in the process of authenticating the data electronically. Serialization is important for consumer packaged goods, such as electronic components, toys, computers and other electronic consumer goods.

The current invention can also be used to check the authenticity of the product bought by a customer. Currently, this is a great concern for pharmaceuticals, since many fake or inferior products circulate via the internet. The colour forming inkjet ink can provide a unique QR code on the package when it is filled, which can be scanned by a smart phone using an application downloadable form the Apple™ or Google™ webstore for verifying the authenticity.

In a preferred embodiment, the packaging is a drink packaging or a "primary" food packaging. Primary food packaging is the material that first envelops the product and holds it. This usually is the smallest unit of distribution or use and is the package which is in direct contact with the contents. Of course, for food safety reasons the inkjet inks may also be used for secondary and tertiary packaging. Secondary packaging is outside the primary packaging, perhaps used to group primary packages together. Tertiary packaging is used for bulk handling, warehouse storage and transport shipping. The most common form of tertiary packaging is a palletized unit load that packs tightly into containers.

The packaging may be transparent, translucent or opaque. There is no restriction on the shape of the packaging. It can be a flat sheet, such as polymeric film and metal sheet, or it can be a three dimensional object like a bottle or jerry-can.

A particularly preferred drink packaging is a plastic bottle having a surface of a polyester selected from the group consisting of polyethylene terephthalate (PET), polyethylene naphthalate (PEN), polylactide (PLA), and polyethylene isosorbide terephthalate (PEIT). PET is particularly preferred for reasons of recyclability.

Another particularly preferred drink packaging in the present invention is aluminium cans and aluminium bottles.

### Inkjet Ink sets

An inkjet ink set according to a preferred embodiment of the present invention includes one or more free radical UV curable pigmented colour inkjet inks and at least one colour forming inkjet inks capable of forming a colour upon a heat treatment, wherein the at least one colour forming inkjet ink is selected from:
a) an aqueous colour forming inkjet ink containing a leuco dye; a colour developing agent or a colour developing agent precursor; and an optothermal converting agent selected from the group consisting of an infrared dye, an infrared pigment and a carbon black;
b) a free radical curable colour forming inkjet ink containing a free radical photoinitiator; a free radical polymerizable compound; a leuco dye; a colour developing agent or a colour developing agent precursor; and an optothermal converting agent selected from the group consisting of an infrared pigment and a carbon black; and
c) a free radical curable colour forming inkjet ink containing a free radical photoinitiator; a polymerizable compound including a free radical polymerizable monomer or oligomer having a carbon-over-oxygen ratio of at least 3.0; and an optothermal converting agent selected from the group consisting of an infrared pigment and a carbon black, wherein the carbon-over-oxygen ratio is defined as the number of carbon atoms over the number of oxygen atoms in the free radical polymerizable monomer or oligomer.

For the above colour forming inkjet inks a) and b), the colour formation comes from a leuco dye that changes from an uncoloured dye to a coloured dye upon heat treatment. Upon heat treatment of the above free radical curable colour forming inkjet ink c), a black colour is produced by carbonization of the polymer obtained after UV curing that contains repeating units derived from the monomer and oligomer having a carbon-over-oxygen ratio of at least 3.0.

The aqueous colour forming inkjet inks are jetted on the packaging or the UV cured image formed by the one or more free radical UV curable pigmented colour inkjet inks. If these aqueous colour forming inkjet inks contain an infrared dye, they are preferably inkjet printed after all the jetted free radical UV curable pigmented colour inkjet inks have been UV cured, because UV radiation tends to destroy the infrared absorbance of the infrared dyes. If the one or more aqueous colour forming inkjet inks are inkjet printed before a final UV curing, they preferably include carbon black or an infrared pigment. Such pigments are very resistant against the destructive action of UV radiation. The leuco dyes are generally quite resistant against deterioration by UV radiation.

For the free radical UV curable colour forming inkjet ink capable of forming a colour upon a heat treatment, the colour formation is obtained by carbonization of the UV cured ink matrix or by a heat treated leuco dye forming a colour.

For food packaging, drink packaging, cosmetical packaging and medical packaging, the one or more free radical UV curable pigmented colour inkjet inks are preferably adapted to be so-called low migration inkjet inks. These adaptations include the use of diffusion hindered photoinitiators and co-initiators, e.g. polymeric or polymerizable photoinitiators and co-initiators, and a mixture of polymerizable compounds selected to accomplish full cure with minimal extractable amounts of unreacted polymerizable compounds. Such an ink composition is exemplified by EP 2053101 A (AGFA) and WO 2015/148094 A (SUN CHEMICAL). Similarly, for food packaging, drink packaging, cosmetical packaging and medical packaging, also the one or more colour forming inkjet inks are adapted to be low migration inkjet inks. For example, diffusion hindered compounds may be used for the leuco dyes, colour developing agents and colour developing agent precursors. Similar measures, like polymeric or polymerizable photoinitiators, as applied above for the one or more free radical UV curable pigmented colour inkjet inks may be used for a free radical curable colour forming inkjet ink.

The above measures for low migration may also be applied for packaging of electronic consumer goods, however generally they are not necessary, since public safety and health are not at risk.

The one or more free radical UV curable pigmented colour inkjet inks and the one or more colour forming inkjet inks capable of forming a colour upon a heat treatment, all preferably have a viscosity at 25°C and at a shear rate of 90 s⁻¹ of less than 100 mPa.s, more preferably less than 50 mPa.s. and most preferably less than 30 mPa.s.

The one or more free radical UV curable pigmented colour inkjet inks and the one or more colour forming inkjet inks capable of forming a colour upon a heat treatment, all preferably have a surface tension from 18 to 40 mN/m at 25°C, more preferably from 20 to 35 mN/m at 25°C.

### Colour Forming Inkjet Inks

In a preferred embodiment, the inkjet ink set contains an aqueous colour forming inkjet ink containing a leuco dye; a colour developing agent or a colour developing agent precursor; and an optothermal converting agent selected from the group consisting of an infrared dye, an infrared pigment and a carbon black.

In another preferred embodiment, the inkjet ink set contains a free radical curable colour forming inkjet ink containing a free radical photoinitiator; a free radical polymerizable compound; a leuco dye; a colour developing agent or a colour developing agent precursor; and an optothermal converting agent selected from the group consisting of an infrared pigment and a carbon black.

In yet another preferred embodiment, the inkjet ink set contains a free radical curable colour forming inkjet ink containing a free radical photoinitiator; a polymerizable compound including a free radical polymerizable monomer or oligomer having a carbon-over-oxygen ratio of at least 3.0; and an optothermal converting agent selected from the group consisting of an infrared pigment and a carbon black, wherein the carbon-over-oxygen ratio is defined as the number of carbon atoms over the number of oxygen atoms in the free radical polymerizable monomer or oligomer.

The inkjet ink set may include a single colour forming inkjet ink selected from the above preferred embodiments, but may also include a combination of the above preferred embodiments. Such a combination may also include several colour forming inkjet inks of the above first two embodiments that form different colours upon heat treatment dependent on the type of leuco dye used in the inkjet ink.

In a preferred embodiment, the inkjet ink set contains two, three or more colour forming inkjet inks containing different leuco dyes or the same leuco dye in different amounts.

In a particularly preferred embodiment, the inkjet ink set contains at least one colour forming inkjet ink containing one or more leuco dyes for forming a cyan or blue colour, at least one colour forming inkjet ink containing one or more leuco dyes for forming a magenta or red colour, at least one colour forming inkjet ink containing one or more leuco dyes for forming a yellow colour, and optionally at least one colour forming inkjet ink containing one or more leuco dyes for forming a black colour. Such an inkjet ink set can be used to form multi colour images. For accomplishing multi colour images, the colour forming inkjet inks each contain an optothermal converting agent having an absorption maximum at a different wavelength, e.g. about 920, 1060 and 1150 nm in the case of three colour forming inkjet inks. Using three lasers having three similar emission wavelengths, the inkjet printed droplets of the three colour forming inkjet inks can be individually addressed.

### Free Radical UV Curable Pigmented Colour Inkjet inks

The one or more free radical UV curable pigmented colour inkjet inks preferably includes at least a cyan more free radical UV curable inkjet ink, a magenta or red more free radical UV curable inkjet ink, a yellow more free radical UV curable inkjet ink and a black more free radical UV curable inkjet ink.

The curable CMYK or CRYK-inkjet ink set may also be extended with extra inks such as violet, green, blue, and/or orange to further enlarge the colour gamut of the inkjet printed image. The free radical UV curable pigmented inkjet ink set may also be extended by the combination of the full density inkjet inks with light density inkjet inks. The combination of these dark and light colour inks and/or black and grey inks improves the image quality by a lowered graininess.

The one or more free radical UV curable pigmented colour inkjet ink may consist of a single inkjet ink, for example, delivering a spot colour such as the red colour of CocaCola™.

The inkjet ink set may further also include a free radical UV curable colourless inkjet ink. Such an inkjet ink is generally to improve the glossiness of the image.

The inkjet ink set preferably includes also a free radical UV curable colourless white inkjet ink. Such an ink used to provide an opaque white background improves the image quality drastically when a transparent packaging is used. An image printed on a transparent PET bottle will look totally different if the PET bottle is filled with water or with a dark beer. For commercial reasons, an appealing image is vital for boosting sales.

The one or more free radical UV curable pigmented colour inkjet inks preferably include no organic solvents, especially when the packaging is selected from the group consisting of food packaging, drink packaging, cosmetical packaging, and medical packaging. In the latter case, the one or more free radical UV curable pigmented colour inkjet inks may be UV curable aqueous inkjet inks since water poses no health risk.

The one or more free radical UV curable pigmented colour inkjet inks preferably do not contain an evaporable component, such as an organic solvent, for reasons of reliable inkjet printing in an industrial environment.

### Leuco Dyes

A leuco dye is present in an aqueous colour forming inkjet ink containing a colour developing agent or a colour developing agent precursor and an optothermal converting agent selected from the group consisting of an infrared dye, an infrared pigment and a carbon black; or in a free radical curable colour forming inkjet ink containing a free radical photoinitiator; a free radical polymerizable compound; a colour developing agent or a colour developing agent precursor; and an optothermal converting agent selected from the group consisting of an infrared pigment and a carbon black.

Before a heat treatment, the leuco dye is substantially colourless. For improving the stability of a jetted colour forming inkjet ink, a leuco dye is selected that requires a colour developing agent in addition to the heat treatment.

Leuco dyes are well-known, for example, by being widely used in conventional pressure-sensitive, photosensitive or thermally-sensitive recording materials. Suitable leuco dyes and their reaction mechanisms are, for example, disclosed in Chemistry and Applications of Leuco Dyes, Ramaiah Muthyala, Plenum Press, 1997.

A number of classes of leuco dyes are preferred as colour forming compounds in the present invention, such as for example: spiropyran leuco dyes such as spirobenzopyrans (e.g. spiroindolinobenzopyrans, spirobenzo-pyranobenzopyrans, 2,2-dialkylchromenes), spironaphtooxazine and spirothiopyran; leuco quinone dyes; azines such as oxazines, diazines, thiazines and phenazine; phthalide- and phthalimidine-type leuco dyes such as triarylmethane phtalides (e.g. crystal violet lactone), diarylmethane phthalides, monoarylmethane phthalides, heterocyclic substituted phthalides, alkenyl substituted phthalides, bridged phthalides (e.g. spirofluorene phthalides and spirobenzanthracene phthalides) and bisphthalides; fluoran leuco dyes such as fluoresceins, rhodamines and rhodols; triarylmethanes such as leuco crystal violet; ketazines; barbituric acid leuco dyes and thiobarbituric acid leuco dyes.

A particularly preferred colour forming inkjet ink for producing a cyan colour include a leuco dye according to Formulae CCFC1, CCFC2 or CCFC3.

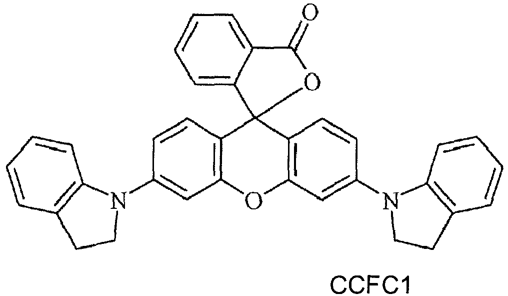

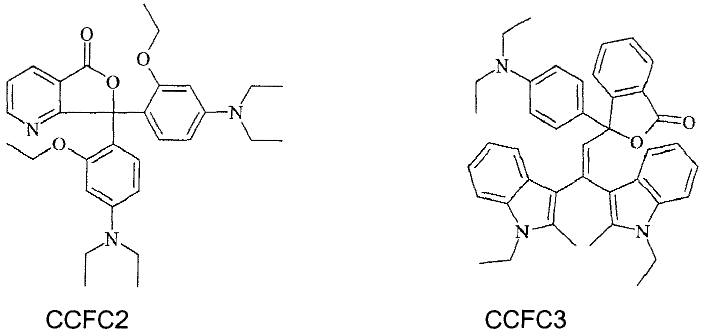

A particularly preferred colour forming inkjet ink for producing a magenta colour includes a leuco dye according to Formula MCFC2:

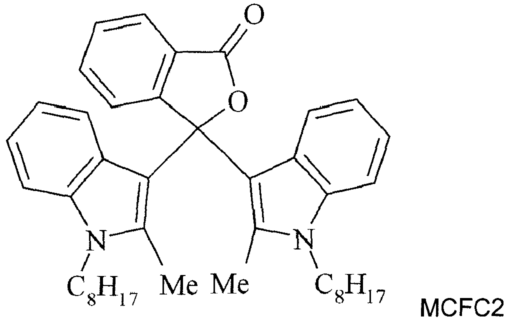

A particularly preferred colour forming inkjet ink for producing a red colour includes a leuco dye according to Formula RCFC:

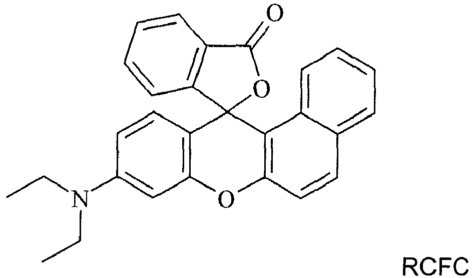

A particularly preferred colour forming inkjet ink for producing a yellow colour includes a leuco dye according to Formula YCFC: 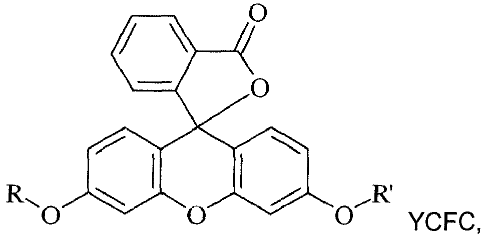 wherein R, R' are independently selected from a group consisting of a linear alkyl group, a branched alkyl group, an aryl and aralkyl group.

In one embodiment, the yellow colour forming leuco dye has a structure according to Formula YCFC, wherein R and R' independently represent a linear alkyl group, a branched alkyl group, an aryl or an aralkyl group substituted by at least one functional group containing an oxygen atom, a sulfur atom or a nitrogen atom.

A particularly preferred yellow colour forming leuco dye is the compound according to Formula YCFC wherein both R and R' are methyl.

In the most preferred embodiment, the colour forming inkjet ink for producing a yellow colour includes a yellow colour forming leuco dye having a structure according to Formulae YCFC1 or YCFC2:

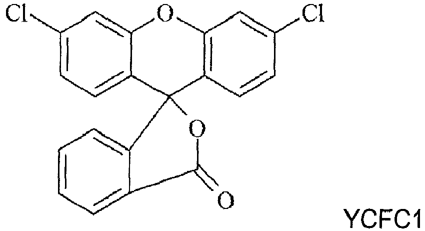

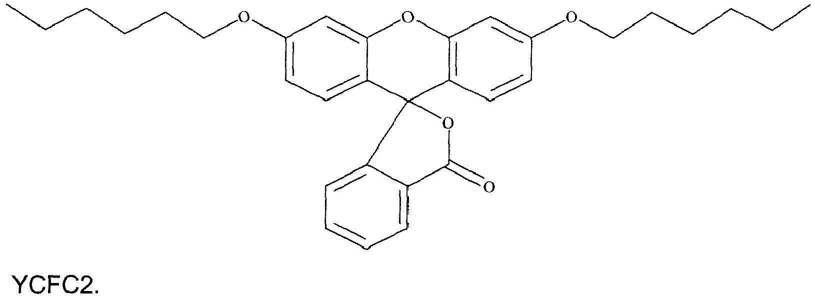

A particularly preferred colour forming inkjet ink for producing a black colour includes a leuco dye according to Formula BCFC: 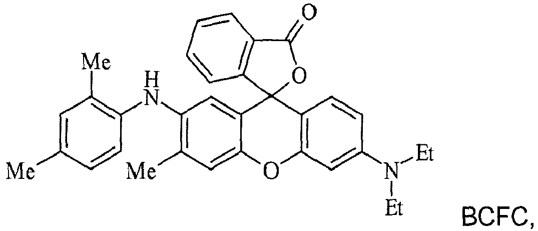 wherein Me = methyl and Et = Ethyl.

For food safety reasons, the leuco dye is preferably a diffusion hindered compound by having at least one of the following properties: a) the molecular weight of the leuco dye is larger than 500, preferably larger than 750 and more preferably larger than 1,000; b) the leuco dye is selected from the group consisting of a polymerizeable leuco dye and a leuco dye covalently bonded to a polymer; and c) the leuco dye is incorporated in the core of a capsule composed of a polymeric shell surrounding a core. A particularly preferred embodiment is a polymeric leuco dye incorporated in the core of a capsule. If the color forming inkjet ink is a free radical curable inkjet ink, then the leuco dye is preferably selected from the group consisting of a polymerizeable leuco dye and a leuco dye covalently bonded to a polymer.

Leuco dyes larger than 500 are preferably selected from the group consisting of difunctional leuco dyes, multifunctional leuco dyes, polymerizable leuco dyes, oligomeric leuco dyes and polymeric leuco dyes.

Difunctional and multifiunctional leuco dyes contain two respectively three or more leuco dye groups.

A polymerizable leuco dye contains a polymerizable group, preferably an alkyne group or an ethylenically unsaturated polymerizable group selected from the group consisting of an acrylate group, a methacrylate group, an acrylamide group, a methacrylamide group, a styrene group, a vinyl ether group, an allyl ether group, an allyl ester group, a vinyl ester group, a succinate group, a maleate group, and a maleimide group.

Difunctional and multifiunctional leuco dyes and polymerizable leuco dyes can be more easily dissolved in a colour forming inkjet ink that oligomeric or polymeric leuco dyes.

An oligomeric leuco dye has two to five repeating units containing a leuco dye group, compounds having more than five repeating units containing a leuco dye group are polymeric leuco dyes. However, a polymeric leuco dye may also consist of one to five leuco dye groups covalently bonded to a polymer. If the colour forming inkjet ink is an aqueous colour forming inkjet ink, then a polymeric leuco dyes is preferably added as latex.

Preferred di- and multifunctional leuco dyes are given below by Table 1 without being limited thereto.

**Table 1**

| | |
|---|---|
| 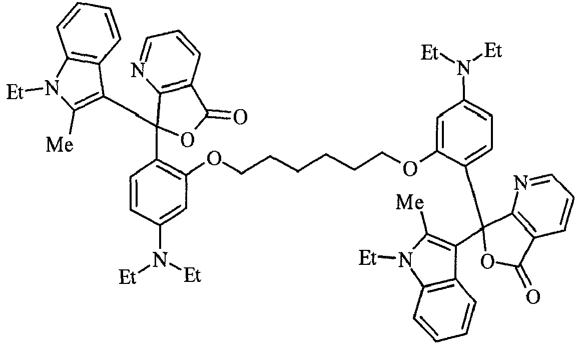 | ML-1 |
| 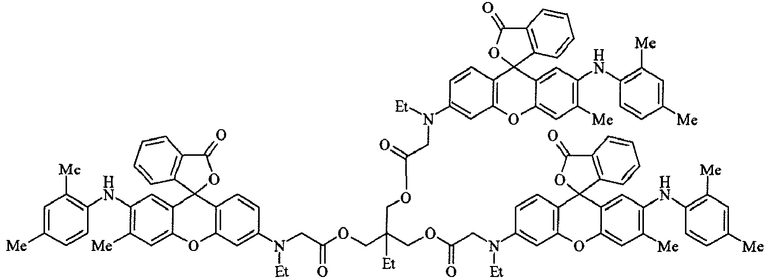 | ML-2 |
| 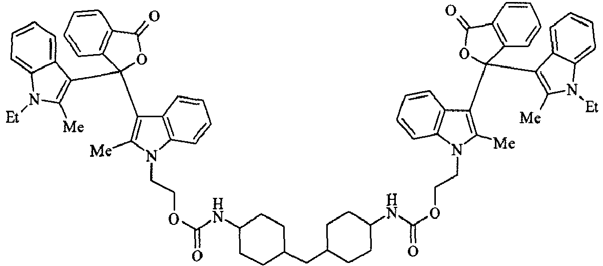 | ML-3 |

Preferred polymeric leuco dyes, represented by their comonomers, are given by Table 2 without being limited thereto. The polymeric leuco dyes preferably have a molecular weight of less than 100,000, more preferably less than 30,000.

**Table 2**

| | | | |
|---|---|---|---|
| 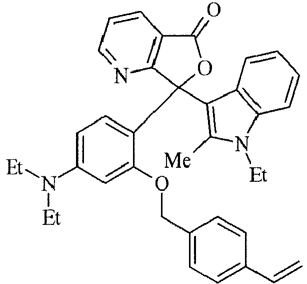 | 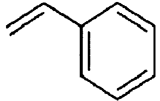 \ | 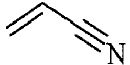 | PL-1 |
| 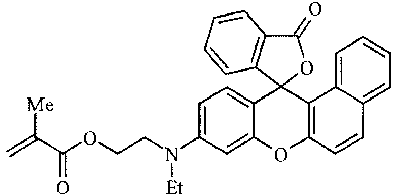 | 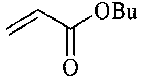 | | PL-2 |
| 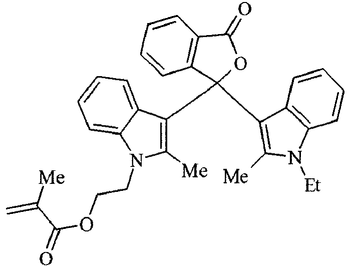 | 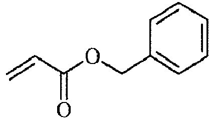 | | PL-3 |
| 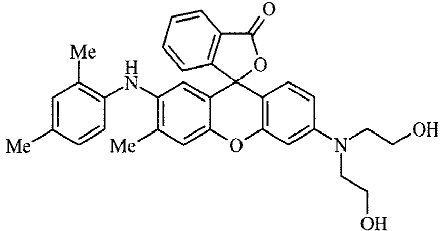 | 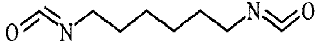 | | PL-4 |
| 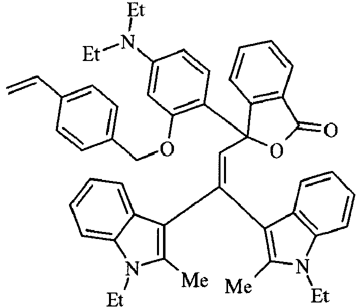 | 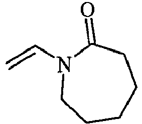 | 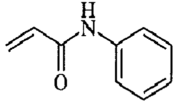 | PL-5 |
| 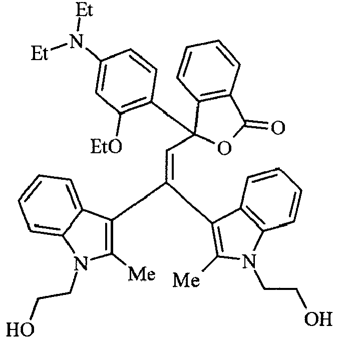 | 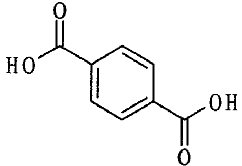 | | PL-6 |

Preferred oligomeric and polymeric leuco dyes, accessible using post derivatisation of polymers as synthetic strategy are given by Table 3 without being limited thereto. The integers n, m and o may be selected as desired but the molecular weight of the compound is preferably less than 100,000, more preferably less than 30,000.

**Table 3**

| | OL-7 |
|---|---|
| 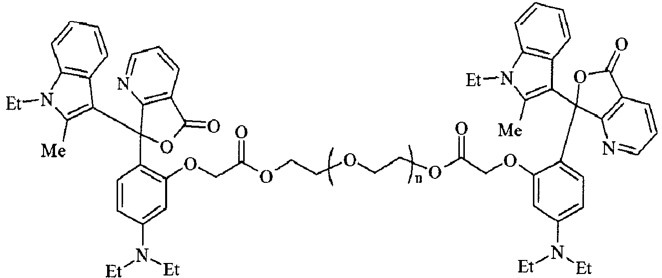 | |
| with n >10, for example n = 13 for poly(ethyleneglycol) 600 | |
| 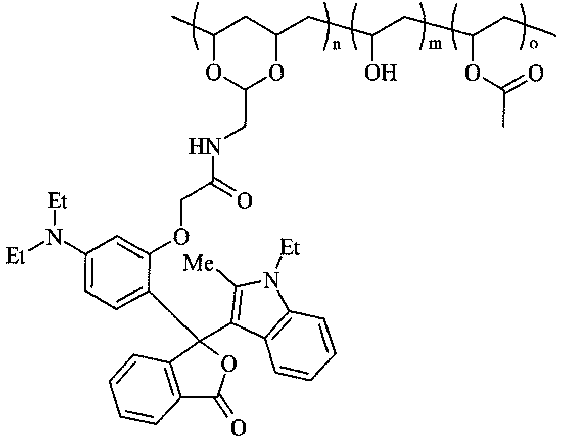 | OL-8 |

Preferred polymerizable leuco dyes are given by Table 4 without being limited thereto.

**Table 4**

| | |
|---|---|
| 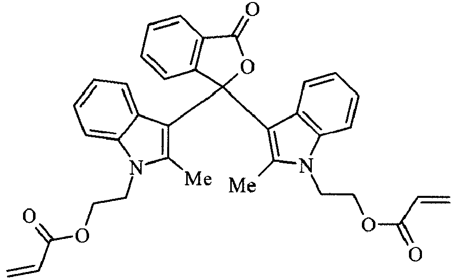 | AL-1 |
| 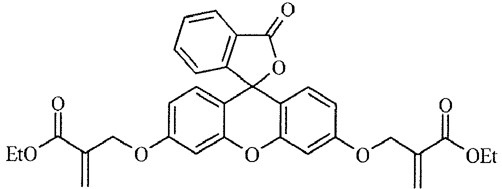 | AL-2 |
| 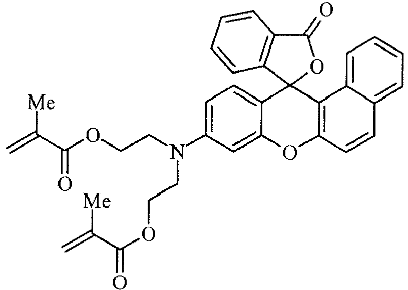 | AL-3 |
| 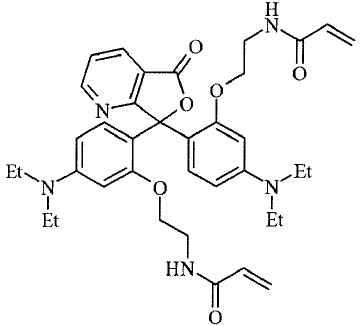 | AL-4 |
| | AL-5 |
| 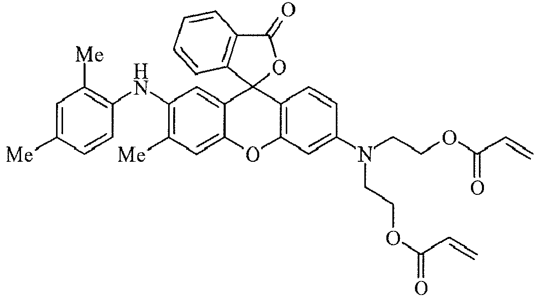 | |
| 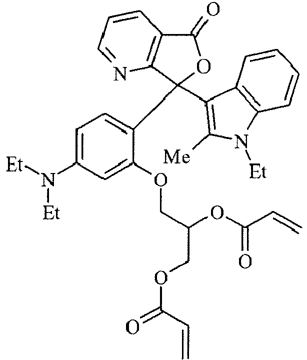 | AL-6 |
| 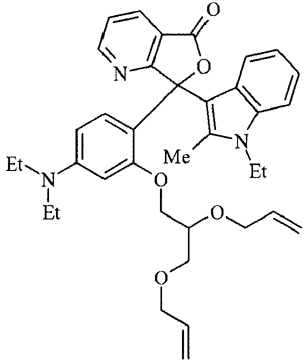 | AL-7 |
| | AL-8 |
| 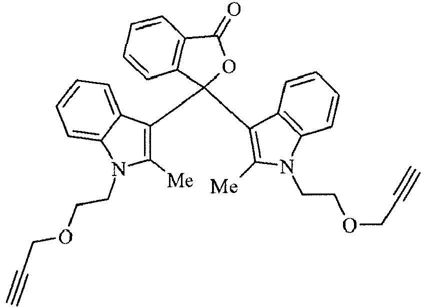 | |
| 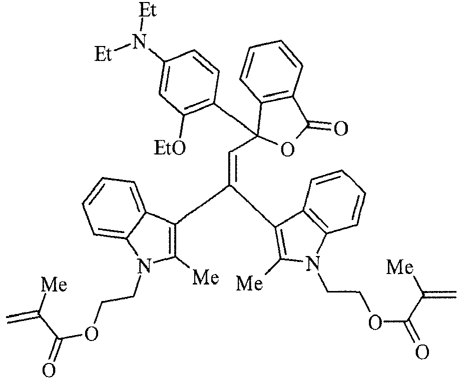 | AL-9 |

In a particularly preferred embodiment, said polymerizable leuco dye comprises at least two free radical polymerizable groups.

### Colour Developing Agents

A colour developing agent is a compound reacting with a colourless leuco dye resulting in the formation of a coloured dye.

Various electron accepting substances may be used as colour developing agent in the present invention. Examples thereof include phenolic compounds, organic or inorganic acidic compounds and esters or salts thereof.

Specific examples include bisphenol A; tetrabromobisphenol A; gallic acid; salicylic acid; 3-isopropyl salicylate; 3-cyclohexyl salicylate; 3-5-di-tert-butyl salicylate; 3,5-di-α-methyl benzyl salicylate; 4,4'-isopropylidenediphenol; 1,1'-isopropylidene bis(2-chlorophenol); 4,4'-isopropylene bis(2,6-dibromo-phenol); 4,4'-isopropylidene bis(2,6-dichlorophenol); 4,4'-isopropylidene bis(2-methyl phenol); 4,4'-isopropylidene bis(2,6-dimethyl phenol); 4,4'-isopropylidene bis(2-tert-butyl phenol); 4,4'-sec-butylidene diphenol; 4,4'-cyclohexylidene bisphenol; 4,4'-cyclohexylidene bis(2-methyl phenol); 4-tert-butyl phenol; 4-phenyl phenol; 4-hydroxy diphenoxide; α-naphthol; β-naphthyl; 3,5-xylenol; thymol; methyl-4-hydroxybenzoate; 4-hydroxy-acetophenone; novolak phenol resins; 2,2'-thio bis(4,6-dichloro phenol); catechol; resorcin; hydroquinone; pyrogallol; fluoroglycine; fluoroglycine carboxylate; 4-tert-octyl catechol; 2,2'-methylene bis(4-chlorophenol); 2,2'-methylene bis(4-methyl-6-tert-butyl phenol); 2,2'-dihydroxy diphenyl; ethyl p-hydroxybenzoate; propyl p-hydroxybenzoate; butyl p-hydroxy-benzoate; benzyl p-hydroxybenzoate; p-hydroxybenzoate-p-chlorobenzyl; p-hydroxybenzoate-o-chlorobenzyl; p-hydroxybenzoate-p-methylbenzyl; p-hydroxybenzoate-n-octyl; benzoic acid; zinc salicylate; 1-hydroxy-2-naphthoic acid; 2-hydroxy-6-naphthoic acid; 2-hydroxy-6-zinc naphthoate; 4-hydroxy diphenyl sulphone; 4-hydroxy-4'-chloro diphenyl sulfone; bis(4-hydroxy phenyl)sulphide; 2-hydroxy-p-toluic acid; 3,5-di-tert-zinc butyl salicylate; 3,5-di-tert-tin butyl salicylate; tartaric acid; oxalic acid; maleic acid; citric acid; succinic acid; stearic acid; 4-hydroxyphthalic acid; boric acid; thiourea derivatives; 4-hydroxy thiophenol derivatives; bis(4-hydroxyphenyl) acetate; bis(4-hydroxyphenyl)ethyl acetate; bis(4-hydroxyphenyl)acetate-n-propyl; bis(4-hydroxy-phenyl)acetate-n-butyl; bis(4-hydroxyphenyl)phenyl acetate; bis(4-hydroxyphenyl)-benzyl acetate; bis(4-hydroxyphenyl)phenethyl acetate; bis(3-methyl-4-hydroxyphenyl)acetate; bis(3-methyl-4-hydroxy-phenyl)methyl acetate; bis(3-methyl-4-hydroxyphenyl)acetate-n-propyl; 1,7-bis(4-hydroxyphenylthio)3,5-dioxaheptane; 1,5-bis(4-hydroxy-phenylthio)3-oxaheptane; 4-hydroxy phthalate dimethyl; 4-hydroxy-4'-methoxy diphenyl sulfone; 4-hydroxy-4'-ethoxy diphenyl sulfone; 4-hydroxy-4'-isopropoxy diphenyl sulfone; 4-hydroxy-4'-propoxy diphenyl sulfone; 4-hydroxy-4'-butoxy diphenyl sulfone; 4-hydroxy-4'-isopropoxy diphenyl sulfone; 4-hydroxy-4'-sec-butoxy diphenyl sulfone; 4-hydroxy-4'-tert-butoxy diphenyl sulfone; 4-hydroxy-4'-benzyloxy diphenyl sulfone; 4-hydroxy-4'-phenoxy diphenyl sulfone; 4-hydroxy-4'-(m-methyl benzoxy)diphenyl sulfone; 4-hydroxy-4'-(p-methyl benzoxy)diphenyl sulfone; 4-hydroxy-4'-(o-methyl benzoxy)diphenyl sulfone; 4-hydroxy-4'-(p-chloro benzoxy)diphenyl sulfone and 4-hydroxy-4'-oxyaryl diphenyl sulfone.

A preferred colour developing agent is a metal salt of salicylate, for example zinc salicylate. A particularly preferred colour developing agent is zinc 3,5-bis(α-methylbenzyl) salicylate.

### Colour Developing Agent Precursors

Instead of a colour developing agent, a so-called colour developing agent precursor may be used. Such a precursor forms a colour developing agent upon exposure to heat. Using a colour developing agent precursor instead of a colour developer may result in a better heat stability of the colour forming inkjet ink.

The colour developing agent precursor may be present in the continuous phase of the laser markable composition or it may be present in the core of a capsule. However, when the colour developing agent is not, or slightly, soluble in aqueous media, it is preferred to add such a colour developing agent as an aqueous dispersion or emulsion.

All publicly-known thermal acid generators can be used as colour developing agent. Thermal acid generators are for example widely used in conventional photoresist material. For more information see for example Encyclopaedia of polymer science", 4th edition, Wiley or "Industrial Photoinitiators, A Technical Guide", CRC Press 2010.

Preferred classes of photo- and thermal acid generators are iodonium salts, sulfonium salts, ferrocenium salts, sulfonyl oximes, halomethyl triazines, halomethylarylsulfone, -haloacetophenones, sulfonate esters, t-butyl esters, allyl substituted phenols, t-butyl carbonates, sulfate esters, phosphate esters and phosphonate esters.

Preferred thermal acid generating compounds have a structure according to Formula (I) or Formula (II): 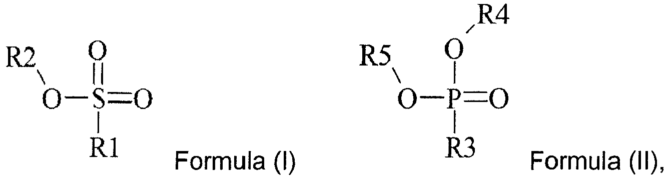 wherein R1 and R3 independently represent an optionally substituted alkyl group, an optionally substituted (hetero)cyclic alkyl group, an optionally substituted alkanyl group, an optionally substituted alkenyl group, an optionally substituted alkynyl group, an optionally substituted (hetero)aryl group, an optionally substituted aralkyl group, an optionally substituted alkoxy group, an optionally substituted (hetero)cyclic alkoxy group, or an optionally substituted (hetero)aryloxy group.

R2, R4 and R5 independently represent an optionally substituted alkyl, an optionally substituted aliphatic (hetero)cyclic alkyl group or an optionally substituted aralkyl group;

R1 and R2, R4 and R5, R3 and R4, and R3 and R5 may represent the necessary atoms to form a ring.

Suitable alkyl groups include 1 or more carbon atoms such as for example C₁ to C₂₂-alkyl groups, more preferably C₁ to C₁₂-alkyl groups and most preferably C₁ to C₆-alkyl groups. The alkyl group may be lineair or branched such as for example methyl, ethyl, propyl (n-propyl, isopropyl), butyl (n-butyl, isobutyl, t-butyl), pentyl, 1,1-dimethyl-propyl, 2,2-dimethylpropyl and 2-methyl-butyl, or hexyl.

Suitable cyclic alkyl groups include cyclopentyl, cyclohexyl or adamantyl.

Suitable heterocyclic alkyl groups include tetrahydrofuryl, piperidinyl, pyrrolidinyl, dioxyl, tetrahydrothiophenyl, silolanyl, or thianyl oxanyl.

Suitable aryl groups include for example phenyl, naphthyl, benzyl, tolyl, ortho- meta- or para-xylyl, anthracenyl or phenanthrenyl.

Suitable heteroaryl groups include monocyclic- or polycyclic aromatic rings comprising carbon atoms and one or more heteroatoms in the ring structure. Preferably 1 to 4 heteroatoms independently selected from nitrogen, oxygen, selenium and sulphur and/or combinations thereof. Examples include pyridyl, pyrimidyl, pyrazoyl, triazinyl, imidazolyl, (1,2,3,)-and (1,2,4)-triazolyl, tetrazolyl, furyl, thienyl, isoxazolyl, thiazolyl and carbazoyl.

Suitable alkoxy groups include those containing from 1 to 18, preferably 2 to 8 carbon atoms, such as ethoxide, propoxide, isopropoxide, butoxide, isobutoxide and tert-butoxide.

Suitable aryloxy groups include phenoxy and naphthoxy.

The alkyl, (hetero)cyclic alkyl, aralkyl, (hetero)aryl, alkoxy, (hetero)cyclic alkoxy, or (hetero)aryloxy groups may include one or more substituents. The optional substituents are preferably selected from an alkyl group such as a methyl, ethyl, n-propyl, isopropyl, n-butyl, 1-isobutyl, 2-isobutyl and tertiary-butyl group; an ester, amide, ether, thioether, ketone, aldehyde, sulfoxide, sulfone, sulfonate ester or sulfonamide group, a halogen such as fluorine, chlorine, bromine or iodine, -OH, -SH, -CN and -NO₂, and/or combinations thereof.

R1 preferably represents a C₁ to C₂₂-alkyl group, an aliphatic alkoxide group containing 2 to 8 carbons, a phenyl group or a tolyl group. R1 most preferably represents a tolyl group.

R2 preferably represents a C₁ to C₂₂-alkyl group or a (hetero)cyclic alkyl group. R2 most preferably represents a cyclohexyl group.

R3 preferably represents a C₁ to C₂₂-alkyl group, an aliphatic alkoxide group containing 2 to 8 carbons or a benzyl group.

In a preferred embodiment, R4 and R5 independently represent a C₁ to C₂₂-alkyl group. In a preferred embodiment, R4 and R5 represent independently an isobutyl, t-butyl, isopropyl, 2-ethylhexyl or a linear C₂ to C₈-alkyl group.

The compound used in the present invention can be a monomer, an oligomer (i.e. a structure including a limited amount of monomers such as two, three or four repeating units) or a polymer (i.e. a structure including more than four repeating units).

The compound used in the present invention contains at least one moiety according to Formula I and/or Formula II, preferably 1 to 150 moieties according to Formula I and/or Formula II. According to a preferred embodiment, the compound according to Formula I or Formula II may be present in a side chain of a polymer

In the embodiment wherein the compound according to Formula I or Formula II is present in the side chain of a polymer, the following moiety (Formula III, IV or V) is preferably attached to the polymer: 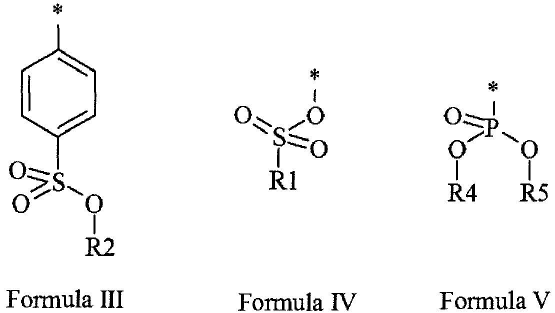 wherein, * denotes the linking to the polymer and R1, R2, R4 and R5 as described above.

In the embodiment wherein the compound according to Formula I is present in the side chain of a polymer, the polymer is more preferably obtained from the coupling of a polymer or copolymer bearing side chains with alcohol groups and a sulfonyl chloride.

In the embodiment wherein the compound according to Formula I is present in the side chain of a polymer, the polymer is most preferably obtained from the coupling of a polymer or copolymer bearing side chains with alcohol groups and tosyl chloride. Useful polymers bearing side chains with alcohol include for example polyvinyl alcohol, polyvinyl butyral, cellulose derivatives, homo- and copolymers of 2-hydroxyethyl methacrylate, 2-hydroxyethyl acrylate, polysiloxane derivatives such as copolymers of hydroxyalkyl-methylsiloxane, and novolac resins.

Preferred examples of acid generating compounds according to the present invention are shown in Table 5.

**Table 5**

| |
|---|
| 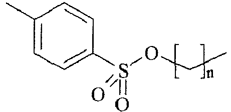 |
| with n = 1-50 |
| 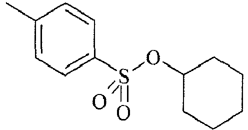 |
| 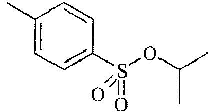 |
| 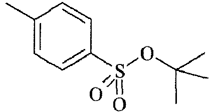 |
| 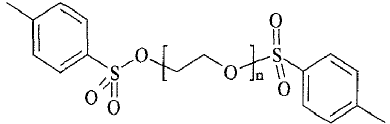 |
| with n = 1-10000 |
| 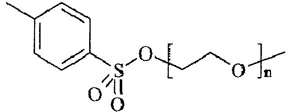 |
| with n = 1-10000 |
| 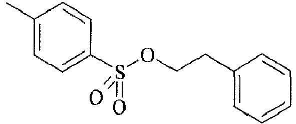 |
| 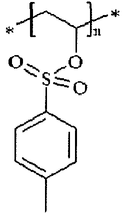 |
| with n = 1-10000 and copolymers thereof |
| 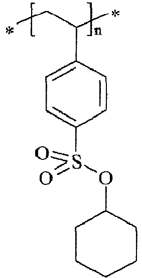 |
| with n = 1-10000 and copolymers thereof |
| 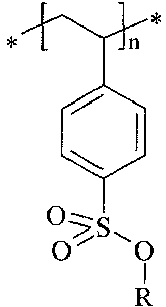 |
| with n = 1-10000 and copolymers thereof and R representing an alkyl group, preferably a tertiary butyl group |
| 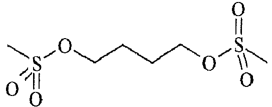 |
| 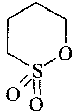 |
| 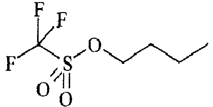 |
| 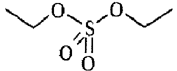 |
| 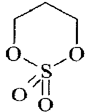 |
| 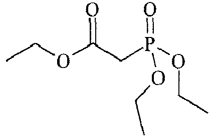 |
| 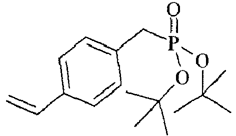 |
| 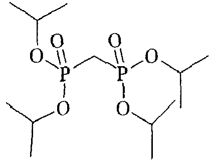 |
| 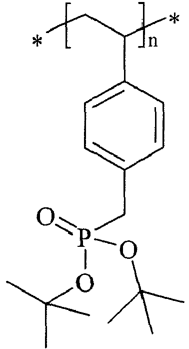 |
| with n = 1-10000 and copolymers thereof |
| 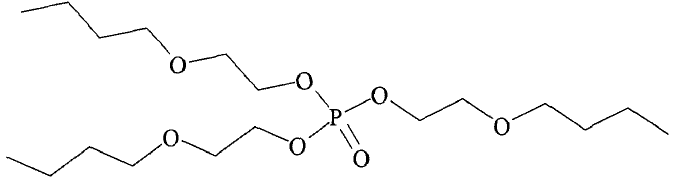 |
| 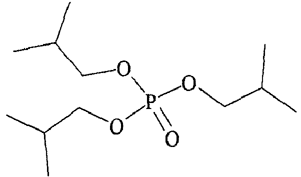 |
| 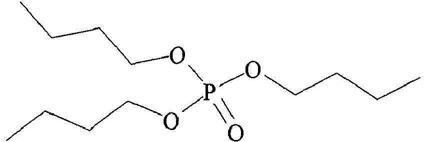 |
| 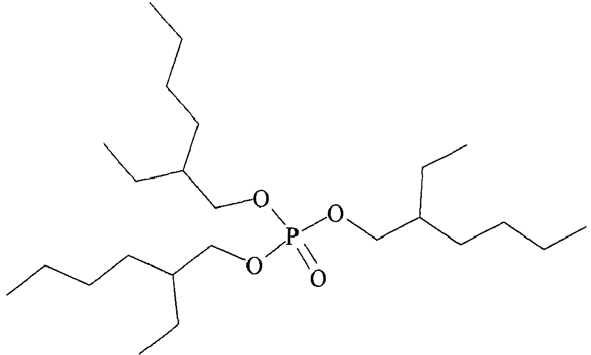 |
| 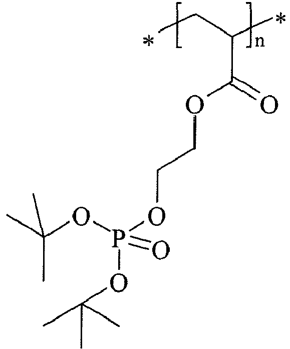 |
| with n = 1-10000 and copolymers thereof |

Other classes of photo- and thermal acid generators are iodonium salts, sulfonium salts, ferrocenium salts, sulfonyl oximes, halomethyl triazines, halomethyl-arylsulfone, -haloacetophenones, sulfonate esters, t-butyl esters, allyl substituted phenols, t-butyl carbonates, sulfate esters, phosphate esters and phosphonate esters.

### Diffusion Hindered Colour Developing Agents and Precursors

For food safety reasons, the colour developing agent (precursor) is preferably a diffusion hindered compound by having at least one of the following properties: a) the molecular weight of the colour developing agent (precursor) is larger than 500, preferably larger than 750 and more preferably larger than 1,000; b) the colour developing agent (precursor) is selected from the group consisting of a polymerizeable colour developing agent (precursor) and a colour developing agent (precursor) covalently bonded to a polymer; and c) the colour developing agent (precursor) is incorporated in the core of a capsule composed of a polymeric shell surrounding a core. A particularly preferred embodiment is a polymeric colour developing agent (precursor) incorporated in the core of a capsule. If the color forming inkjet ink is a free radical curable inkjet ink, then the colour developing agent (precursor) is preferably selected from the group consisting of a polymerizeable colour developing agent (precursor) and a colour developing agent (precursor) covalently bonded to a polymer.

A colour developing agent (precursor) larger than 500 is preferably selected from the group consisting of difunctional colour developing agents or precursors thereof, multifunctional colour developing agents or precursors thereof, polymerizable colour developing agent (precursor)s, oligomeric colour developing agents or precursors thereof and polymeric colour developing agents or precursors thereof.

Difunctional and multifiunctional colour developing agents or precursors thereof contain two respectively three or more colour developing agent (precursor) groups.

A polymerizable colour developing agent (precursor) contains a polymerizable group, preferably an alkyne group or an ethylenically unsaturated polymerizable group selected from the group consisting of an acrylate group, a methacrylate group, an acrylamide group, a methacrylamide group, a styrene group, a vinyl ether group, an allyl ether group, an allyl ester group, a vinyl ester group, a succinate group, a maleate group, and a maleimide group.

Difunctional and multifiunctional colour developing agents or precursors thereof and polymerizable colour developing agents or precursors thereofcan be more easily dissolved in a colour forming inkjet ink that oligomeric or polymeric colour developing agents or precursors thereof.

An oligomeric colour developing agent (precursor) has two to five repeating units containing a colour developing agent (precursor) group, compounds having more than five repeating units containing a colour developing agent (precursor) group are agents or precursors thereof. However, a polymeric colour developing agent (precursor) may also consist of one to five colour developing agent (precursor) groups covalently bonded to a polymer. If the colour forming inkjet ink is an aqueous colour forming inkjet ink, then a polymeric colour developing agent (precursor) is preferably added as latex.

Preferred difunctional and multifunctional colour developing agents and agent precursors thereof are given by Table 6 without being limited thereto.

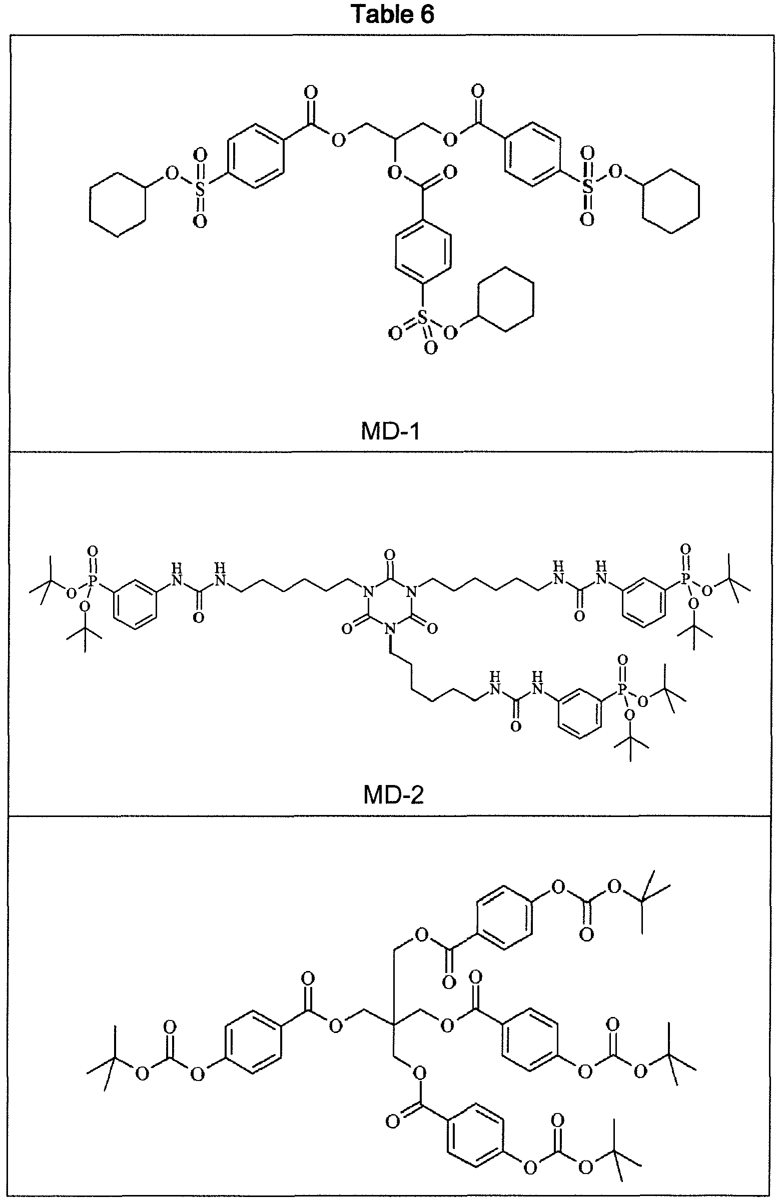

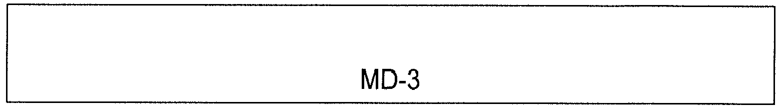

Preferred polymeric and oligomeric developer agents and developer agent precursors are given by Table 7 without being limited thereto. The integers n, m and p may be selected as desired but the molecular weight of the compound is preferably less than 100,000, more preferably less than 30,000.

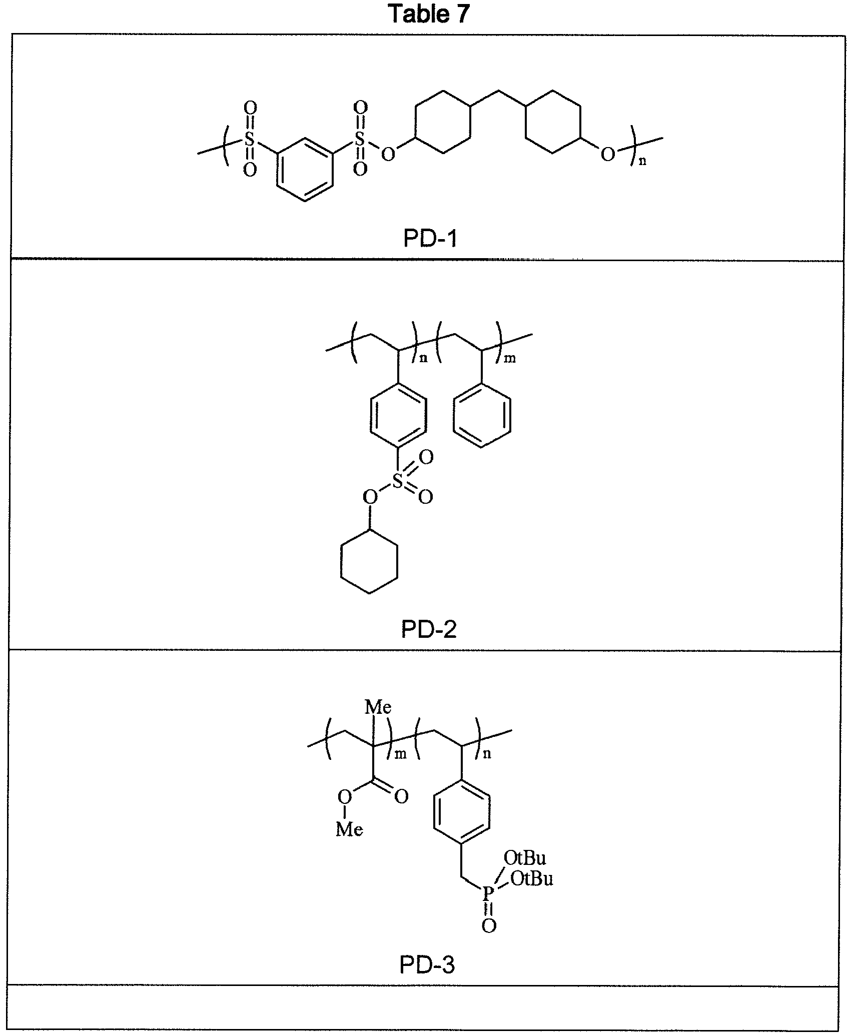

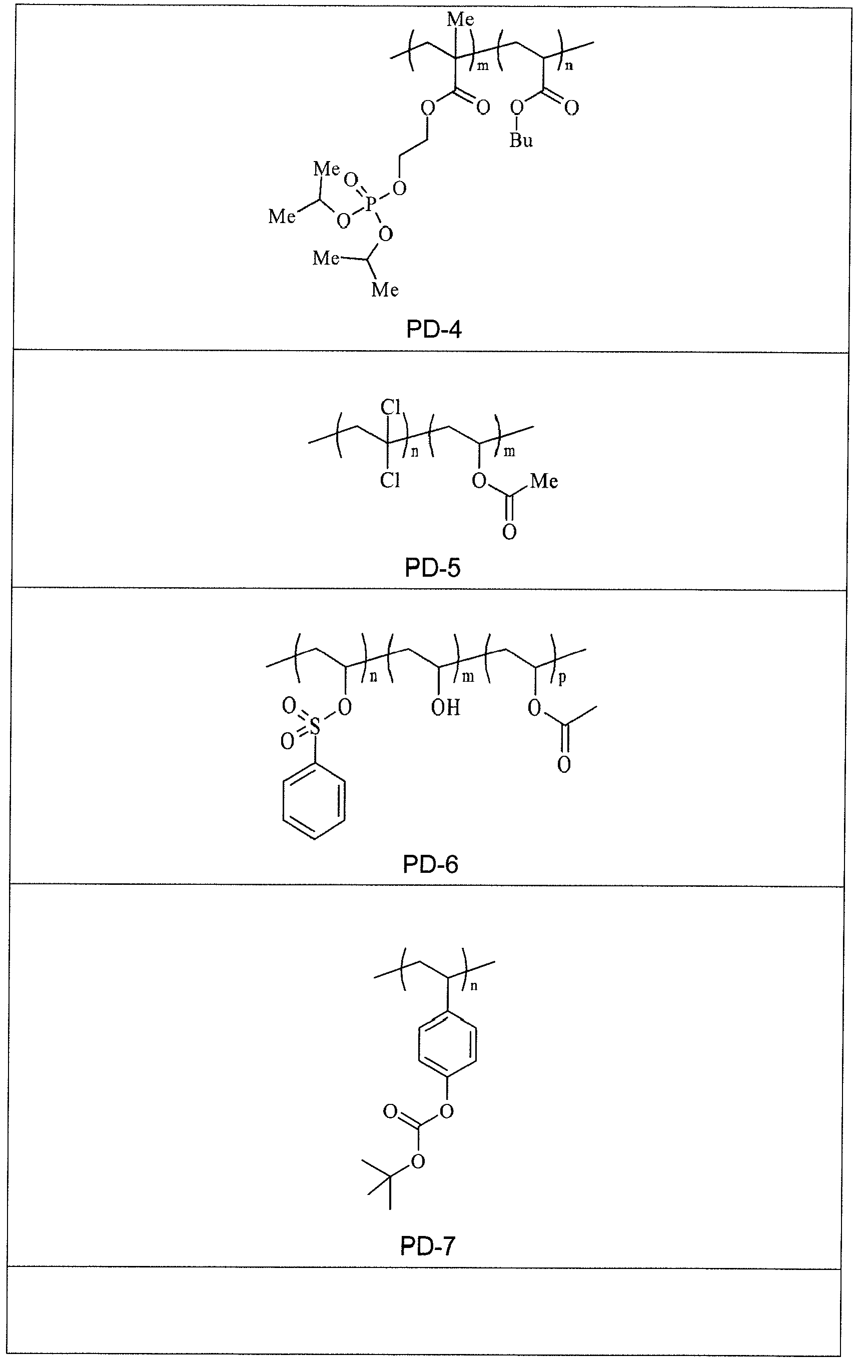

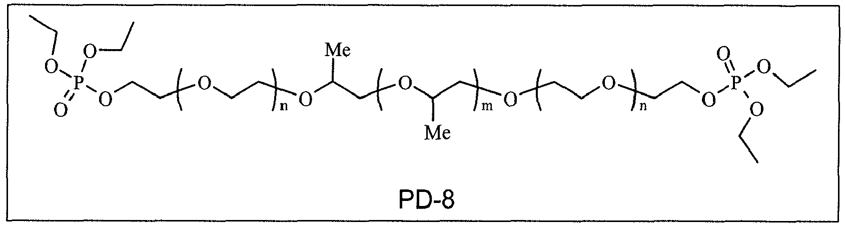

Preferred polymerizable developer agents and developer agent precursors are given by Table 8 without being limited thereto.

**Table 8**

| | |
|---|---|
| 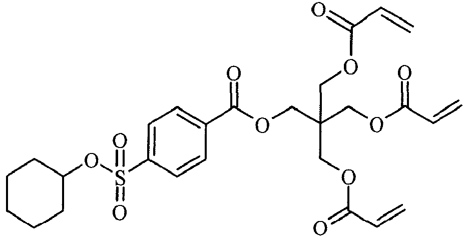 | AD-1 |
| 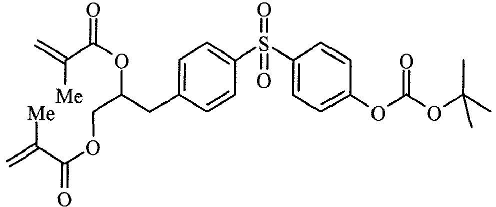 | AD-2 |
| 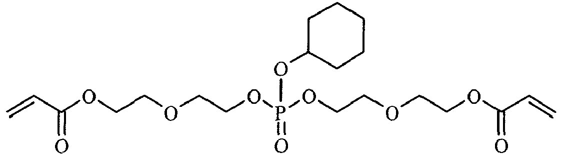 | AD-3 |
| 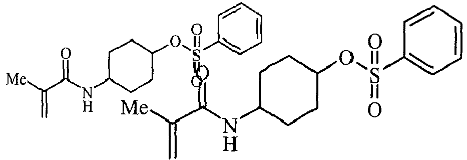 | AD-4 |
| 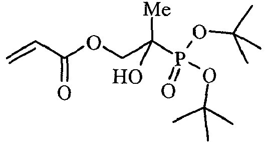 | AD-5 |

In a particularly preferred embodiment, the diffusion hindered leuco dye and the diffusion hindered developer or developer precursor are integrated into the same multifunctional, polymeric or oligomeric structure to guarantee close proximity of the developer or developer precursor and the leuco dye.

Preferred examples of leuco dye - developer precursor copolymers are given by Table 9 without being limited thereto. The integers n, m, p and o may be selected as desired but the molecular weight of the compound is preferably less than 100,000, more preferably less than 30,000.

**Table 9**

| | |
|---|---|
| 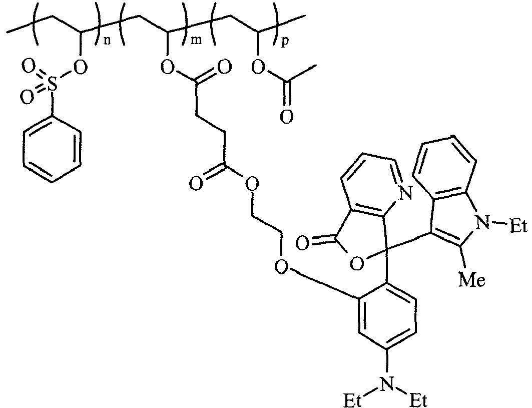 | PLD-1 |
| 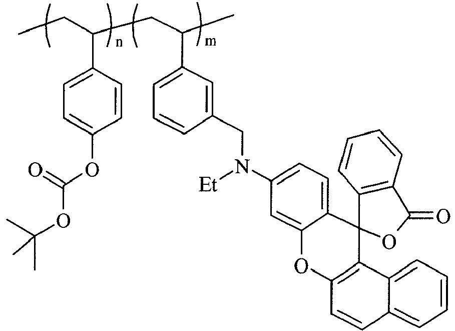 | PLD-2 |
| 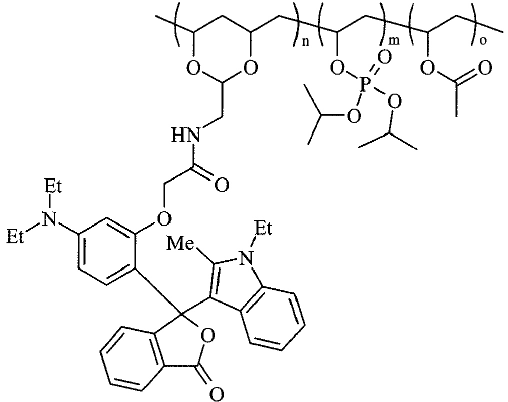 | PLD-3 |

An aqueous colour forming inkjet ink of the invention preferably includes the colour developing agent precursor in the form of a polymer particle, which is capable of forming an acid upon exposure to heat. The acid liberated upon exposure to heat within the meaning of the invention includes Arrhenius acids, Bronsted-Lowry acids, and Lewis acids.

Polymer particles, which are capable of forming an acid upon exposure to heat, may have two functions:
- a colour developing agent precursor, which generates an acid upon exposure to heat, and
- a film forming binder.

The polymer particles comprise repeating units, which are capable of generating an acid upon exposure to heat. Typically, exposure to heat may cause a fragmentation reaction resulting in an acid formation. The resulting acid may be a low molecular weight molecule formed by the fragmentation reaction or the acid may reside on the polymer particle after a fragmentation reaction. Table 10 depicts (part of) polymeric acid precursors, more specific the repeating unit that is able to generate an acid upon thermal treatment.

**Table 10**

| |
|---|
| 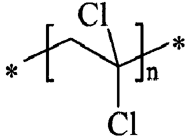 |
| 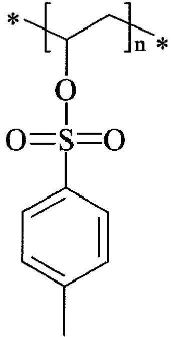 |
| 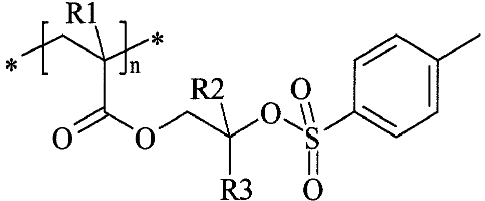 |
| wherein R2 and R3 independently represent hydrogen or alkyl groups |
| 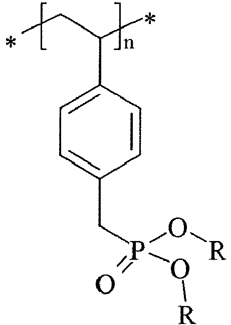 |
| wherein R is an alkyl group, preferably a tertiary butyl group |
| 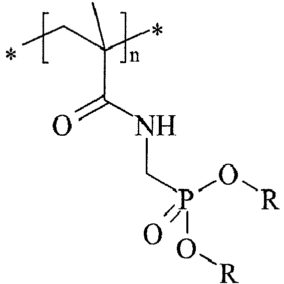 |
| wherein R is an alkyl group, preferably a tertiary butyl group |
| 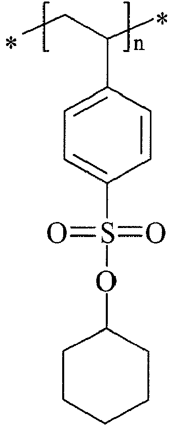 |
| 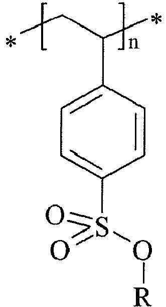 |
| wherein R is an alkyl group, preferably a tertiary butyl group |
| 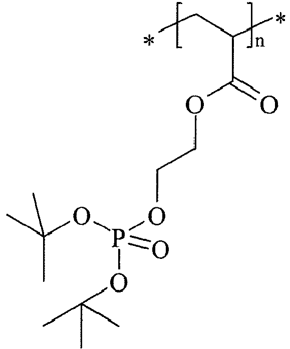 |

Preferred polymeric particles are capable of releasing a low molecular weight acid.

A particularly preferred polymer particle is a polyvinylidenechloride (PVDC) polymer particle. Upon exposure to heat, such a polymer particle is capable of releasing HCl.

The polyvinylidenechloride (PVDC) particle is preferably a vinylidene chloride copolymer comprising 90 wt% or less of vinylidene chloride based on the total weight of the binder.

When the amount of vinylidene chloride is above 90 wt % based on the total weight of the binder, the crystallinity of the binder becomes too high resulting in poor film forming property. Copolymerizaton of vinylidene chloride with further monomers renders the copolymer more amorphous and thus more soluble in the liquid carrier.

The vinylidene chloride copolymer preferably comprises a further monomer selected from the group consisting of vinyl chloride, alkyl acrylate, alkyl methacrylate, vinylether, vinylacetate, vinyl alcohol, acrylonitrile, methacrylonitrile, maleic acid, maleic anhydride, itaconic acid.

The vinylidene chloride copolymer more preferably comprises a further monomer selected from the group consisting of vinyl chloride, acrylonitrile, maleci acid, maleic anhydride and an alkyl acrylate.

The alkyl acrylate and alkyl methacrylate referred to above is preferably a C1-C10 alkyl acrylate or methacrylate. Particular preferred alkyl acrylates or alkyl methacrylates are methyl and butyl acrylate or methyl and butyl methacrylate.

Water based vinylidene copolymers may also be used in the present invention. Examples of such copolymers are Daran® 8730, Daran®8550, Daran®SL112, Daran®SL143, Daran®SL159 or Daran®8100, all commercially available from Owensboro Specialty Polymers; Diofan®193D, Diofan®P520, Diofan®P530 all commercially available from Solvay.

A PVDC copolymer may be characterized by the so-called dehydrochlorination constant (DHC). The amount of HCl liberated of by a specific PVDC copolymer at a specified temperature during a specific time is measured.

The amount of polymer particle in the aqueous colour forming inkjet ink is preferably between 5 and 75 wt %, more preferably between 7.5 and 50 wt %, most preferably between 10 and 40 wt %, relative to the total weight of the aqueous colour forming inkjet ink.

### Capsules

The capsules used in the present invention are composed of a polymeric shell surrounding a core. For achieving reliable inkjet printing, the capsules preferably have an average particle size of not more than 5 µm, more preferably of not more than 2 µm, most preferably of not more than 1 µm as determined by dynamic laser diffraction. Capsules having an average particle size smaller than 1 µm are typically called nanocapsules, while capsules having an average particle size above 1 µm are typically called microcapsules.

Upon heat treatment, a rupture of the capsule results in a reaction between the leuco dye and a colour developing agent which then causes colour formation.

The morphology of capsules and their preparation methods have been reviewed, for example, by Jyothi Sri.S in the International Journal of Pharma and Bio Sciences (Vol.3, Issue 1, Jan-Mar 2012).

The capsules may have different morphologies, dependent on the preparation method of the capsules. For example mononuclear capsules have a shell around a core while polynuclear capsules have multiple cores enclosed within the shell. Matrix encapsulation refers to a core material which is homogeneously distributed into the shell.

Hydrophilic polymers, surfactants and/or polymeric dispersants may be used to obtain stable dispersions of the capsules in an aqueous medium and to control the particle size and the particle size distribution of the capsules.

In a preferred embodiment, the capsules are dispersed in the aqueous medium using a dispersing group covalently bonded to the polymeric shell. The dispersing group is preferably selected from a group consisting of a carboxylic acid or salt thereof, a sulfonic acid or salt thereof, a phosphoric acid ester or salt thereof, a phosphonic acid or salt thereof, an ammonium group, a sulfonium group, a phosphonium group and a polyethylene oxide group.

The dispersing groups stabilize the aqueous dispersion by electrostatic stabilization. For example, a slightly alkaline aqueous medium will turn the carboxylic acid groups covalently bonded to the polymeric shell into ionic groups, whereafter the negatively charged capsules have no tendency to agglomerate. If sufficient dispersing groups are covalently bonded to the polymeric shell, the capsule becomes a so-called self-dispersing capsule. Other dispersing groups such as sulfonic acid groups tend to be dissociated even in acid aqueous medium and thus do not require the addition of an alkali.

The dispersing group can be used in combination with a polymeric dispersant in order to accomplish steric stabilization. For example, the polymeric shell may have covalently bonded carboxylic acid groups that interact with amine groups of a polymeric dispersant. However, in a more preferred embodiment, no polymeric dispersant is used and dispersion stability is accomplished solely by electrostatic stabilization.

The capsules may also be stabilized by solid particles which adsorb onto the shell. Preferred solid particles are colloidal silica.

There is no real limitation on the type of polymer used for the polymeric shell of the capsule. Preferably, the polymer used in the polymeric shell is crosslinked. By crosslinking, more rigidity is built into the capsules allowing a broader range of temperatures and pressures for handling the aqueous colour forming inkjet ink.

Preferred examples of the polymeric shell material include polyureas, polyacrylates, polymethacrylates, polyurethanes, polyesters, polycarbonates, polyamides, melamine based polymers and mixtures thereof, with polyureas and polyurethanes being especially preferred.

Capsules can be prepared using both chemical and physical methods. Suitable encapsulation methodologies include complex coacervation, liposome formation, spray drying and polymerization methods.

In the present invention, preferably a polymerization method is used as it allows the highest control in designing the capsules. More preferably interfacial polymerization is used to prepare the capsules used in the invention. This technique is well-known and has recently been reviewed by Zhang Y. and Rochefort D. (Journal of Microencapsulation, 29(7), 636-649 (2012) and by Salitin (in Encapsulation Nanotechnologies, Vikas Mittal (ed.), chapter 5, 137-173 (Scrivener Publishing LLC (2013)).

Interfacial polymerization is a particularly preferred technology for the preparation of capsules according to the present invention. In interfacial polymerization, such as interfacial polycondensation, two reactants meet at the interface of the emulsion droplets and react rapidly.

In general, interfacial polymerization requires the dispersion of an oleophilic phase in an aqueous continuous phase or vice versa. Each of the phases contains at least one dissolved monomer (a first shell component) that is capable of reacting with another monomer (a second shell component) dissolved in the other phase. Upon polymerisation, a polymer is formed that is insoluble in both the aqueous and the oleophilic phase. As a result, the formed polymer has a tendency to precipitate at the interface of the oleophilic and aqueous phase, hereby forming a shell around the dispersed phase, which grows upon further polymerization. The capsules according to the present invention are preferably prepared from an oleophilic dispersion in an aqueous continuous phase.

Typical polymeric shells, formed by interfacial polymerization are selected from the group consisting of polyamides, typically prepared from di- or poly-acid chlorides as first shell component and di- or oligoamines as second shell component; polyurea, typically prepared from di- or oligoisocyanates as first shell component and di- or oligoamines as second shell component; polyurethanes, typically prepared from di- or oligoisocyanates as first shell component and di- or oligoalcohols as second shell component; polysulfonamides, typically prepared from di- or oligosulfochlorides as first shell component and di- or oligoamines as second shell component; polyesters, typically prepared from di- or oligo-acid chlorides as first shell component and di- or oligoalcohols as second shell component; and polycarbonates, typically prepared from di- or oligo-chloroformates as first shell component and di- or oligoalcohols as second shell component and. The shell can be composed of combinations of these polymers.

In a further embodiment, polymers, such as gelatine, chitosan, albumin and polyethylene imine can be used as first shell components in combination with a di- or oligo-isocyanate, a di- or oligo acid chloride, a di-or oligo-chloroformate and an epoxy resin as second shell component.

In a particularly preferred embodiment, the shell is composed of a polyurethane, a polyurea or a combination thereof.

In a further preferred embodiment, a water immiscible solvent is used in the dispersion step, which is removed by solvent stripping before or after the shell formation. In a particularly preferred embodiment, the water immiscible solvent has a boiling point below 100°C at normal pressure. Esters are particularly preferred as water immiscible solvent. A preferred organic solvent is ethyl acetate, because it also has a low flammability hazard compared to other organic solvents.

A water immiscible solvent is an organic solvent having low miscibility in water. Low miscibility is defined as any water solvent combination forming a two phase system at 20°C when mixed in a one over one volume ratio.

The method for preparing a dispersion of capsules preferably includes the following steps:
a) preparing a non-aqueous solution of a first shell component for forming a polymeric shell, a leuco dye, and optionally a water immiscible organic solvent having a lower boiling point than water;
b) preparing an aqueous solution of a second shell component for forming the polymeric shell;
c) dispersing the non-aqueous solution under high shear in the aqueous solution;
d) optionally stripping the water immiscible organic solvent from the mixture of the aqueous solution and the non-aqueous solution; and
e) preparing the polymeric shell around the leuco dye by interfacial polymerization of the first and second shell components for forming the polymeric shell.

The optional optothermal converting agent may be added together with the leuco dye in step (a) to the non-aqueous solution resulting in capsules wherein both the leuco dye and the optothermal converting agent are included in the core of the capsule.

A single type of capsules may be included in one or more aqueous colour forming inkjet inks or a plurality of capsules may be included in a single aqueous colour forming inkjet ink.

In one embodiment, a single aqueous colour forming inkjet ink may contain two, three or four types of capsules each containing a different leuco dye and a different optothermal converting agent.

In a more preferred embodiment, the aqueous colour forming inkjet ink contains capsules including one or more leuco dyes for forming a cyan or blue colour and a first optothermal converting agent, capsules including one or more leuco dyes for forming a magenta or red colour and a second optothermal converting agent having a wavelength at maximum absorption different from that of the first optothermal converting agent, and capsules including one or more leuco dyes for forming a yellow colour and a third optothermal converting agent having a wavelength at maximum absorption different from that of the first and second optothermal converting agents.

### Optothermal Converting Agents

An optothermal converting agent generates heat upon absorption of radiation. The optothermal converting agent preferably generates heat upon absorption of infrared radiation.

The optothermal converting agent is preferably an infrared absorbing dye, an infrared absorbing pigment, a carbon black or a combination thereof.

The aqueous colour forming inkjet inks may contain an optothermal converting agent selected from the group consisting of an infrared dye, an infrared pigment and a carbon black, while free radical UV curable colour forming inkjet inks contain an optothermal converting agent selected from the group consisting of an infrared pigment and a carbon black.

Suitable examples of infrared dyes (IR dyes) include, but are not limited to, polymethyl indoliums, metal complex IR dyes, indocyanine green, polymethine dyes, croconium dyes, cyanine dyes, merocyanine dyes, squarylium dyes, chalcogeno-pyryloarylidene dyes, metal thiolate complex dyes, bis(chalcogenopyrylo)-polymethine dyes, oxyindolizine dyes, bis(aminoaryl)polymethine dyes, indolizine dyes, pyrylium dyes, quinoid dyes, quinone dyes, phthalocyanine dyes, naphthalo-cyanine dyes, azo dyes, (metalized) azomethine dyes and combinations thereof.

Preferred infrared absorbing dyes are polymethine dyes due to their low absorption in the visible region and their selectivity, i.e. narrow absorption peak in the infrared region. Particular preferred polymethine infrared dyes are cyanine infrared dyes.

Preferred infrared dyes having an absorption maximum of more than 1100 nm are those disclosed in EP-A 2722367, paragraphs [0044] to [0083] and the unpublished EP-A 14166498.7 (filed on 30-04-2014).

Infrared dyes having an absorption maximum between 1000 nm and 1100 nm are preferably selected from the group consisting of quinoline dyes, indolenine dyes, especially a benzo[cd]indoline dye. A particularly preferred infrared dye is 5-[2,5-bis[2-[1-(1-methylbutyl)-benz[cd]indol-2(1H)-ylidene]ethylidene]-cyclopentylidene]-1-butyl-3-(2-methoxy-1-methylethyl)-2,4,6(1 H,3H,5H)-pyrimidinetrione (CASRN 223717-84-8) represented by the Formula IR-1:

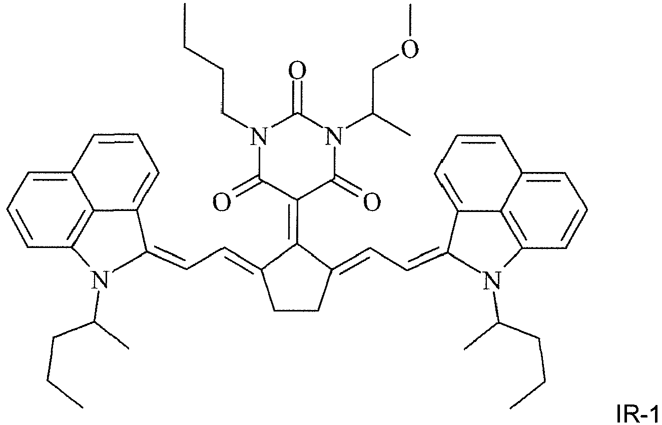

The infrared dye IR-1 has an absorption maximum λₘₐₓ of 1052 nm making it very suitable for a Nd-YAG laser having an emission wavelength of 1064 nm.

Infrared dyes having an absorption maximum between 830 nm and 1000 nm are preferably selected from the group consisting of quinoline dyes, indolenine dyes, especially benzo[e]indolenine dyes, and benzo[f]indolenine dyes.

The amount of the IR dyes in the colour forming inkjet inks is preferably selected to achieve a good compromise between laser sensitivity and background discolouration. Preferably an infrared dye lay-down of between 0.005 and 1.000 g/m², more preferably between 0.010 and 0.500 g/m², most preferably between 0.015 and 0.050 g/m². Enough IR dye has to be present to ensure sufficient colour density formation upon exposure to IR radiation. However, using too much IR dye may result in unwanted background colouration.

Water soluble infrared dyes can be added as such to the aqueous medium of the inkjet ink. However, preferred infrared dyes are often not, or slightly, soluble in aqueous media. Such infrared dyes are preferably added to the inkjet ink as an aqueous dispersion. Particularly preferred, such infrared dyes may be incorporated into the core of a capsule containing the leuco dye.

In a preferred embodiment, the infrared dye is a diffusion hindered infrared dye. Multifunctional, polymeric and oligomeric infrared dyes are particularly preferred. Preferred examples of diffusion hindered infrared dyes are given by Table 11 without being limited thereto. The integer n may be selected as desired but the molecular weight of the compound is preferably less than 100,000, more preferably less than 30,000.

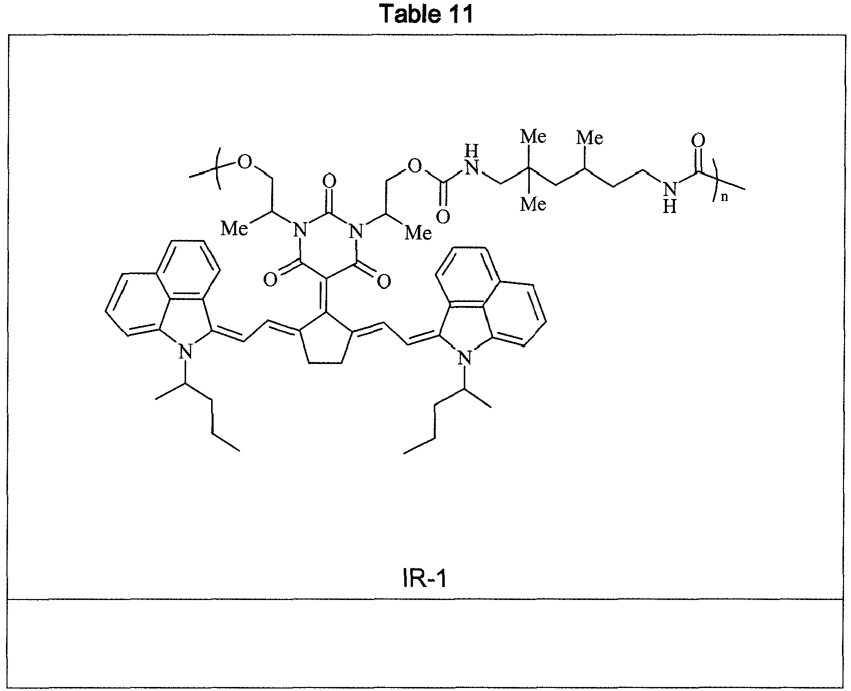

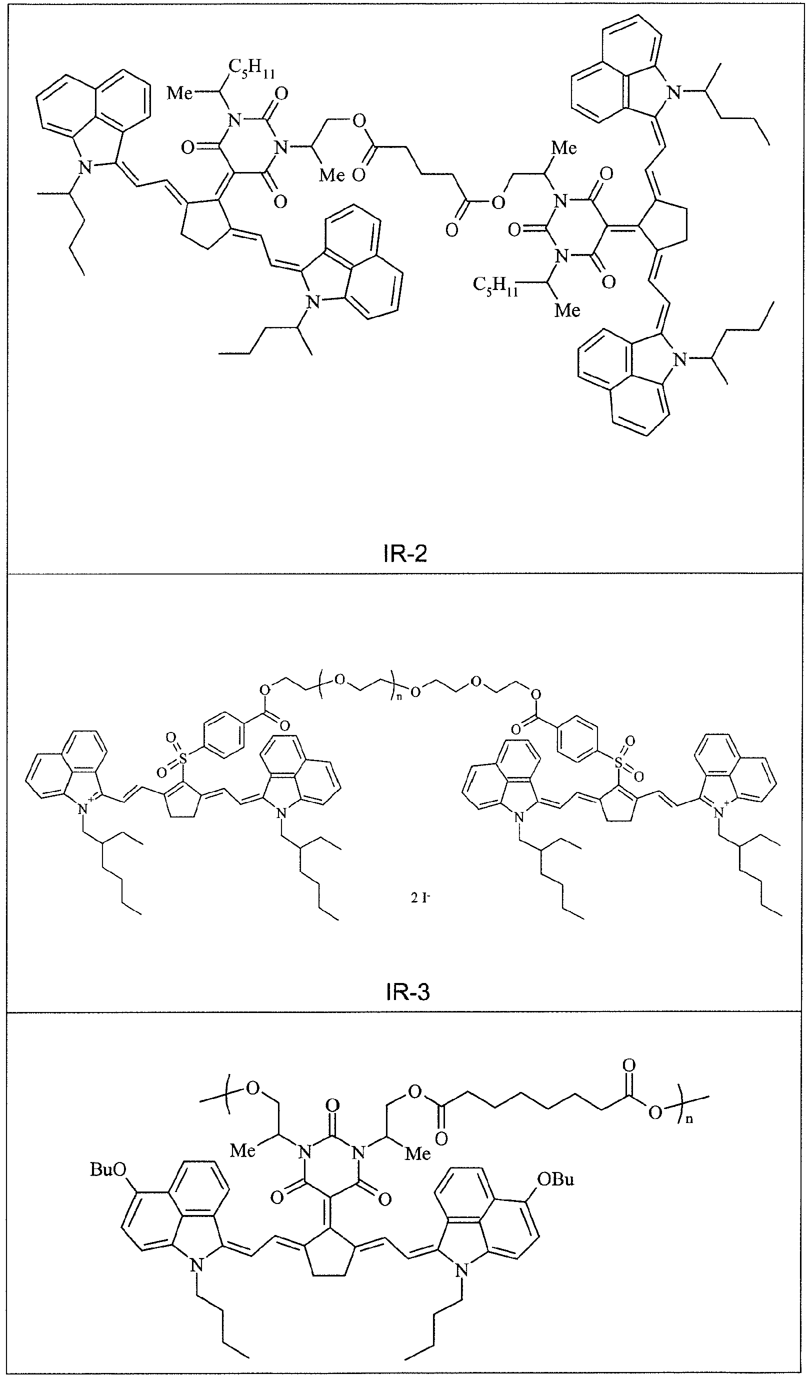

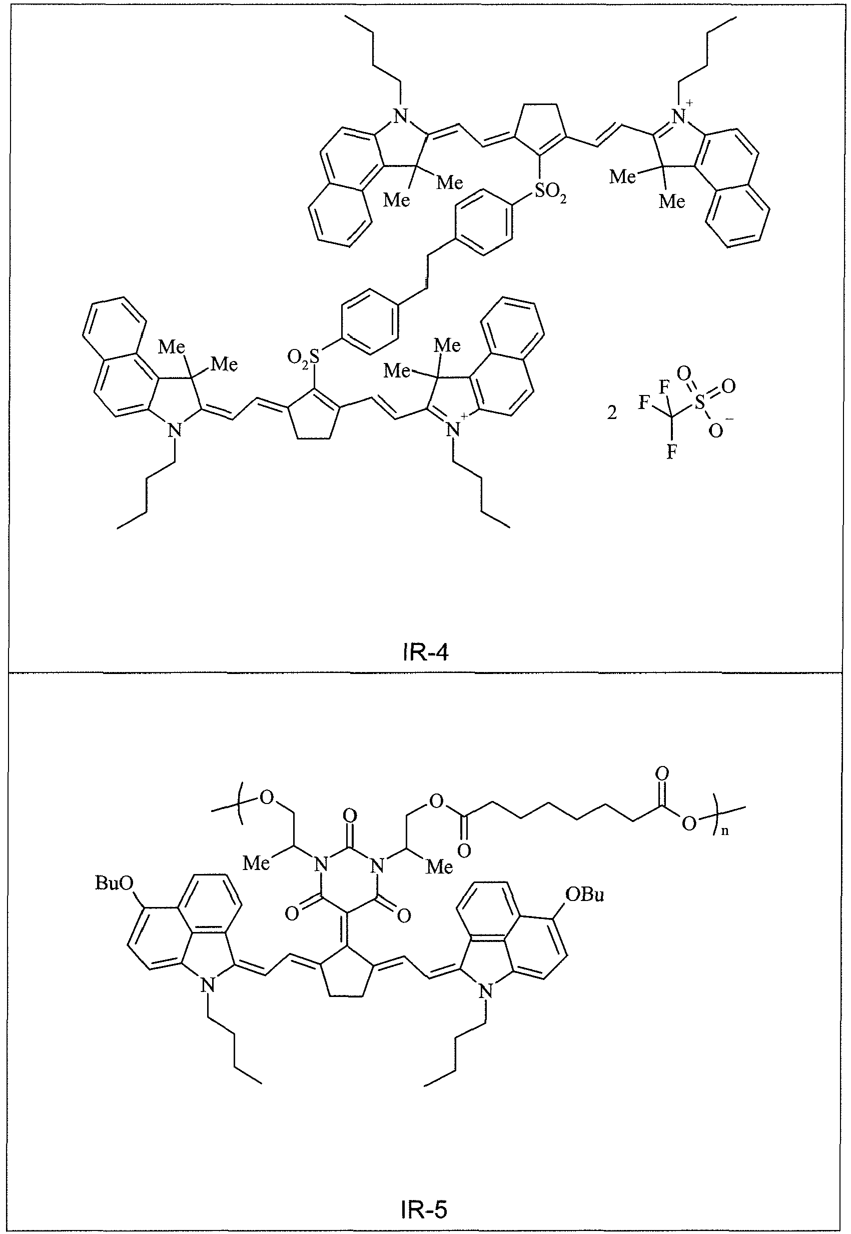

Other optothermal converting agents may have a particulate form and include carbon black such as acetylene black, channel black, furnace black, lamp black, and thermal black.

Other optothermal converting agents having a particulate form are infrared absorbing pigments that are oxides, hydroxides, sulfides, sulfates and phosphates of metals such as copper, bismuth, iron, nickel, tin, zinc, manganese, zirconium, tungsten, lanthanum, and antimony including lanthane hexaboride, indium tin oxide (ITO) and antimony tin oxide, titanium black and black iron oxide.

The infrared dyes disclosed above may also be modified to be infrared absorbing pigments, for example cyanine pigment, merocyanine pigment, etc.

The particle size of the pigment is preferably from 1 to 60 nm, more preferably from 5 to 50 nm, most preferably from 10 to 30 nm.

The amount of the infrared absorbing pigment is between 10 and 1000 ppm, preferably between 25 and 750 ppm, more preferably between 50 and 500 ppm, most preferably between 100 and 250 ppm, all relative to the total dry weight of the inkjet printed layer. An amount of infrared absorbing pigment above 1000 ppm results in a too high background discolouration.

### UV Absorbers

The aqueous colour forming inkjet ink may also include a UV-absorber. The UV-absorber may be present in the aqueous medium, covalently bound to a polymeric particle or included in the capsules.

Examples of suitable UV-absorbers include 2-hydroxyphenyl-benzophenones (BP) such as Chimassorb™ 81 and Chimassorb™ 90 from BASF; 2-(2-hydroxyphenyl)-benzotriazoles (BTZ) such as Tinuvin™ 109, Tinuvin™ 1130, Tinuvin™ 171, Tinuvin™ 326, Tinuvin™ 328, Tinuvin™ 384-2, Tinuvin™ 99-2, Tinuvin™ 900, Tinuvin™ 928, Tinuvin™ Carboprotect™^{,} Tinuvin™ 360, Tinuvin™ 1130, Tinuvin™ 327, Tinuvin™ 350, Tinuvin™ 234 from BASF, Mixxim™ BB/100 from FAIRMOUNT, Chiguard 5530 from Chitec; 2-hydroxy-phenyl-s-triazines (HPT) such as Tinuvin™ 460, Tinuvin™ 400, Tinuvin™ 405, Tinuvin™ 477, Tinuvin™ 479, Tinuvin™ 1577 ED, Tinuvin™ 1600 from BASF, 2-(2,4-dihydroxyphenyl)-4,6-bis-(2,4-dimethylphenyl)-s-triazine (CASRN1668-53-7) from Capot Chemical Ltd and 4-[4,6-bis(2-methyl-phenoxy)-1,3,5-triazin-2-yl]-1,3-benzenediol (CASRN 13413-61-1); titanium dioxide such as Solasorb 100F from from Croda Chemicals; zink oxide such as Solasorb 200F from Croda Chemicals; benzoxazines such as Cyasorb UV-3638 F, CYASORB™ UV-1164 from CYTEC; and oxamides such as Sanduvor VSU from Clariant.

Preferred UV absorbers have in the wavelength region between 300 and 400 nm a maximum absorption above 330 nm, more preferably above 350 nm.

Particular preferred UV absorbers are hydroxyphenyl benzotriazoles and 2-hydroxyphenyl-s-triazines having a maximum absorption above 350 nm in the wavelength region 300 - 400 nm.

### Acid Scavenger

The colour forming inkjet inks containing a leuco dye may contain one or more acid scavengers.

Acid scavengers include organic or inorganic bases. Examples of the inorganic bases include hydroxides of alkali metals or alkaline earth metals; secondary or tertiary phosphates, borates, carbonates; quinolinates and metaborates of alkali metals or alkaline earth metals; a combination of zinc hydroxide or zinc oxide and a chelating agent (e.g., sodium picolinate); hydrotalcite such as Hycite 713 from Clariant; ammonium hydroxide; hydroxides of quaternary alkylammoniums; and hydroxides of other metals. Examples of the organic bases include aliphatic amines (e.g., trialkylamines, hydroxylamines and aliphatic polyamines); aromatic amines (e.g., N-alkyl-substituted aromatic amines, N-hydroxylalkyl-substituted aromatic amines and bis[p-(dialkylamino)phenyl]-methanes), heterocyclic amines, amidines, cyclic amidines, guanidines and cyclic guanidines.

Other preferred acid scavangers are HALS compounds. Example of suitable HALS include Tinuvin™ 292, Tinuvin™ 123, Tinuvin™ 1198, Tinuvin™ 1198 L, Tinuvin™ 144, Tinuvin™ 152, Tinuvin™ 292, Tinuvin™ 292 HP, Tinuvin™ 5100, Tinuvin™ 622 SF, Tinuvin™ 770 DF, Chimassorb™ 2020 FDL, Chimassorb™ 944 LD from BASF; Hostavin 3051, Hostavin 3050, Hostavin N 30, Hostavin N321, Hostavin N 845 PP, Hostavin PR 31 from Clariant.

Further examples of acid scavengers are salts of weak organic acids such as carboxylates (e.g. calcium stearate).

A preferred acid scavenger is an organic base, more preferably an amine. A particular preferred acid scavenger is an organic base having a pKb of less than 7.

### Free Radical Photoinitiators and Co-initiators

The photoinitiating system in the one or more free radical UV curable pigmented colour inkjet inks and the free radical curable colour forming inkjet inks includes one or more free radical photoinitiators and optionally one or more co-initiators. A free radical photoinitiator is a chemical compound that initiates polymerization of monomers and oligomers when exposed to actinic radiation by the formation of a free radical.

Two types of free radical photoinitiators can be distinguished and used in the inkjet ink of the present invention. A Norrish Type I initiator is an initiator which cleaves after excitation, yielding the initiating radical immediately. A Norrish type II-initiator is a photoinitiator which is activated by actinic radiation and forms free radicals by hydrogen abstraction from a second compound that becomes the actual initiating free radical. This second compound is called a polymerization synergist or co-initiator. Both type I and type II photoinitiators can be used in the present invention, alone or in combination.

In order to increase the photosensitivity further, the one or more free radical UV curable pigmented colour inkjet inks and the free radical curable colour forming inkjet inks may additionally contain co-initiators. Suitable examples of co-initiators can be categorized in three groups:

tertiary aliphatic amines such as methyldiethanolamine, dimethylethanolamine, triethanolamine, triethylamine and N-methylmorpholine;

aromatic amines such as amylparadimethylaminobenzoate, 2-n-butoxyethyl-4-(dimethylamino) benzoate, 2-(dimethylamino)ethylbenzoate, ethyl-4-(dimethylamino)benzoate, and 2-ethylhexyl-4-(dimethylamino)benzoate; and

(meth)acrylated amines such as dialkylamino alkyl(meth)acrylates (e.g., diethylaminoethylacrylate) or N-morpholinoalkyl-(meth)acrylates (e.g., N-morpholinoethyl-acrylate). The preferred co-initiators are aminobenzoates.

Suitable photo-initiators are disclosed in CRIVELLO, J.V., et al. VOLUME III: Photoinitiators for Free Radical Cationic . 2nd edition. Edited by BRADLEY, G.. London,UK: John Wiley and Sons Ltd, 1998. p.287-294.

Specific examples of photo-initiators may include, but are not limited to, the following compounds or combinations thereof: benzophenone and substituted benzophenones, 1-hydroxycyclohexyl phenyl ketone, thioxanthones such as isopropylthioxanthone, 2-hydroxy-2-methyl-1-phenylpropan-1-one, 2-benzyl-2-dimethylamino- (4-morpholinophenyl) butan-1-one, benzil dimethylketal, bis (2,6- dimethylbenzoyl) -2,4, 4-trimethylpentylphosphine oxide, 2,4,6trimethylbenzoyldiphenylphosphine oxide, 2-methyl-1- [4- (methylthio) phenyl] -2-morpholinopropan-1-one, 2,2-dimethoxy-1, 2-diphenylethan-1-one or 5,7-diiodo-3- butoxy-6-fluorone.

Suitable commercial photo-initiators include Irgacure™ 184, Irgacure™ 500, Irgacure™ 907, Irgacure™ 369, Irgacure™ 1700, Irgacure™ 651, Irgacure™ 819, Irgacure™ 1000, Irgacure™ 1300, Irgacure™ 1870, Darocur™ 1173, Darocur™ 2959, Darocur™ 4265 and Darocur™ ITX available from CIBA SPECIALTY CHEMICALS, Lucerin™ TPO available from BASF AG, Esacure™ KT046, Esacure™ KIP150, Esacure™ KT37 and Esacure™ EDB available from LAMBERTI, H-Nu™ 470 and H-Nu™ 470X available from SPECTRA GROUP Ltd..

In a preferred embodiment, the photoinitiator is selected from the group consisting of non-polymeric multifunctional photoinitiators, oligomeric or polymeric photoinitiators and polymerizable photoinitiators. Such a diffusion hindered photoinitiator exhibits a much lower mobility in a cured layer of the UV curable inkjet inks than a low molecular weight monofunctional photoinitiator, such as benzophenone. Including diffusion hindered photoinitiators, and also diffusion hindered co-initiators improves the food safety when printing on food packaging.

Most preferably the diffusion hindered photoinitiator is a polymerizable photoinitiator, preferably having at least one acrylate group. And most preferably the diffusion hindered coinitiator is a polymerizable coinitiator, preferably having at least one acrylate group.

Suitable diffusion hindered photoinitiator may contain one or more photoinitiating functional groups derived from a Norrish type I-photoinitiator selected from the group consisting of benzoinethers, benzil ketals, α,α-dialkoxyacetophenones, α-hydroxyalkylphenones, α-aminoalkylphenones, acylphosphine oxides, acylphosphine sulfides, α-haloketones, α-halosulfones and phenylglyoxalates.

A suitable diffusion hindered photoinitiator may contain one or more photoinitiating functional groups derived from a Norrish type II-initiator selected from the group consisting of benzophenones, thioxanthones, 1,2-diketones and anthraquinones.

Suitable diffusion hindered photoinitiators are also those disclosed in EP 2053101 A (AGFA GRAPHICS) in paragraphs [0074] and [0075] for difunctional and multifunctional photoinitiators, in paragraphs [0077] to [0080] for polymeric photoinitiators and in paragraphs [0081] to [0083] for polymerizable photoinitiators.

Other preferred polymerizable photoinitiators are those disclosed in EP 2065362 A (AGFA) and EP 2161264 A (AGFA).

A preferred amount of photoinitiator is 0 - 50 wt%, more preferably 0.1 - 20 wt%, and most preferably 0.3 - 15 wt% of the total weight of the inkjet ink.

Preferred diffusion hindered co-initiators are the polymerizable co-initiators disclosed in EP 2053101 A (AGFA GRAPHICS) in paragraphs [0088] and [0097].

Preferred diffusion hindered co-initiators include a polymeric co-initiator having a dendritic polymeric architecture, more preferably a hyperbranched polymeric architecture. Preferred hyperbranched polymeric co-initiators are those disclosed in US 2006014848 (AGFA) incorporated herein as a specific reference.

The one or more free radical UV curable pigmented colour inkjet inks and the free radical curable colour forming inkjet inks preferably comprises the diffusion hindered co-initiator in an amount of 0.1 to 50 wt%, more preferably in an amount of 0.5 to 25 wt%, most preferably in an amount of 1 to 10 wt% of the total weight of the inkjet ink.

### Polymerizable Compounds

The one or more free radical UV curable pigmented colour inkjet inks and the free radical curable colour forming inkjet ink include polymerizable compounds preferably present in an amount of at least 60 wt%, more preferably at least 70 wt%, wherein the wt% is based on the total weight of the inkjet ink.

Any monomer and oligomer capable of free radical polymerization may be used as polymerizable compound. The viscosity of the UV curable inkjet ink can be adjusted by varying the ratio between the monomers and oligomers. The polymerizable compounds may be any monomer and/or oligomer found in the Polymer Handbook Vol 1 + 2, 4th edition, edited by J. BRANDRUP et al., Wiley-Interscience, 1999.

In a preferred embodiment, the monofunctional polymerizable compounds are selected from acrylic acid, methacrylic acid, maleic acid (or there salts), maleic anhydride, alkyl(meth)acrylates (linear, branched and cycloalkyl) such as methyl(meth)acrylate, n-butyl(meth)acrylate, tert-butyl(meth)acrylate, cyclohexyl(meth)acrylate, and 2-ethylhexyl(meth)acrylate; aryl(meth)acrylates such as benzyl(meth)acrylate, and phenyl(meth)acrylate; hydroxyalkyl(meth)acrylates such as hydroxyethyl(meth)acrylate, and hydroxypropyl(meth)acrylate; (meth)acrylates with other types of functionalities (e.g. oxiranes, amino, fluoro, polyethylene oxide, phosphate substituted) such as glycidyl (meth)acrylate, dimethylaminoethyl(meth)acrylate, trifluoroethyl acrylate, methoxypolyethyleneglycol (meth)acrylate, and tripropyleneglycol (meth)acrylate phosphate; allyl derivatives such as allyl glycidyl ether; styrenics such as styrene, 4-methylstyrene, 4-hydroxystyrene, 4-acetostyrene, and styrenesulfonic acid; (meth)acrylonitrile; (meth)acrylamides (including N-mono and N,N-disubstituted) such as N-benzyl (meth)acrylamide; maleimides such as N-phenyl maleimide; vinyl derivatives such as vinylcaprolactam, vinylpyrrolidone, vinylimidazole, vinylnapthalene, and vinyl halides; vinylethers such as vinylmethyl ether; vinylesters of carboxylic acids such as vinylacetate, vinylbutyrate, and vinyl benzoate.

In a more preferred embodiment, the monofunctional polymerizable compounds are selected from monoacrylates and vinyllactams, such as N-vinylcaprolactam

Particularly preferred monofunctional polymerizable compounds are selected from the group consisting of isoamyl acrylate, stearyl acrylate, lauryl acrylate, octyl acrylate, decyl acrylate, isoamylstyl acrylate, isostearyl acrylate, 2-ethylhexyl-diglycol acrylate, 2-hydroxybutyl acrylate, 2-acryloyloxyethylhexahydrophthalic acid, butoxyethyl acrylate, ethoxydiethylene glycol acrylate, methoxydiethylene glycol acrylate, methoxypolyethylene glycol acrylate, methoxypropylene glycol acrylate, phenoxyethyl acrylate, tetrahydrofurfuryl acrylate, isobornyl acrylate, 2-hydroxyethyl acrylate, 2-hydroxypropyl acrylate, 2-hydroxy-3-phenoxypropyl acrylate, vinyl ether acrylate, 2-acryloyloxyethylsuccinic acid, 2-acryloyxyethylphthalic acid, 2-acryloxyethyl-2-hydroxyethyl-phthalic acid, lactone modified flexible acrylate, t-butylcyclohexyl acrylate, caprolactone acrylate, cyclic trimethylolpropane formal acrylate, cyclic trimethylolpropane formal acrylate, ethoxylated nonyl phenol acrylate, isodecyl acrylate, isooctyl acrylate, octyldecyl acrylate, alkoxylated phenol acrylate, tridecyl acrylate and acryloylmorpholine.

Particularly preferred polyfunctional polymerizable compounds are selected from the group consisting of triethylene glycol diacrylate, tetraethylene glycol diacrylate, polyethylene glycol diacrylate, dipropylene glycol diacrylate, tripropylene glycol diacrylate, polypropylene glycol diacrylate, 1,4-butanediol diacrylate, 1,6-hexanediol diacrylate, 1,9-nonanediol diacrylate, neopentyl glycol diacrylate, dimethyloltricyclodecane diacrylate, bisphenol A EO (ethylene oxide) adduct diacrylate, bisphenol A PO (propylene oxide) adduct diacrylate, hydroxypivalate neopentyl glycol diacrylate, propoxylated neopentyl glycol diacrylate, alkoxylated dimethyloltricyclodecane diacrylate and polytetramethylene glycol diacrylate, trimethylolpropane triacrylate, EO modified trimethylolpropane triacrylate, tri (propylene glycol) triacrylate, caprolactone modified trimethylolpropane triacrylate, pentaerythritol triacrylate, pentaerithritol tetraacrylate, pentaerythritolethoxy tetraacrylate, dipentaerythritol hexaacrylate, ditrimethylolpropane tetraacrylate, glycerinpropoxy triacrylate, alkoxylated cyclohexanone dimethanol diacrylate, caprolactam modified dipentaerythritol hexaacrylate, alkoxylated cyclohexanone dimethanol diacrylate, alkoxylated hexanediol diacrylate, dioxane glycol diacrylate, dioxane glycol diacrylate, cyclohexanone dimethanol diacrylate, diethylene glycol diacrylate, neopentyl glycol diacrylate, vinylether acrylates, propoxylated glycerine triacrylate and propoxylated trimethylolpropane triacrylate, ditrimethylolpropane tetraacrylate, dipentaerythritol pentaacrylate, ethoxylated pentaeryhtitol tetraacrylate, methoxylated glycol acrylates and acrylate esters.

Preferred vinylether acrylates are those disclosed in US 6310115 (AGFA). A particularly preferred compound is 2- (2-vinyloxyethoxy)ethyl acrylate. Other suitable vinylether acrylates are those disclosed in columns 3 and 4 of US 67679890 B (NIPPON SHOKUBAI).

### Free Radical Polymerizable Compounds having a C/O Ratio of at least 3.0

If the colour formation proceeds by carbonization of the UV cured ink matrix of the free radical curable colour forming inkjet ink, then the free radical curable colour forming inkjet ink contains at least one polymerizable compound selected from a free radical polymerizable monomer or oligomer having a carbon-over-oxygen ratio of at least 3.0, wherein the carbon-over-oxygen ratio is defined as the number of carbon atoms over the number of oxygen atoms in the free radical polymerizable monomer or oligomer. The carbon over oxygen ratio (C/O ratio) is preferably at least 3, more preferably at least 3.5 and most preferably at least 4.

In a preferred embodiment, the monomers or oligomers having a high carbon over oxygen ratio are difunctional or polyfunctional polymerizable compounds. Particularly preferred monomers combining difunctionality or polyfunctionality with a high carbon over oxygen ratio are given by Table 12 without being limited thereto.

**Table 12**

| Polymerizable Compound | C/O ratio |
|---|---|
| 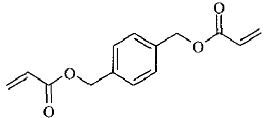 | 3.5 |
| 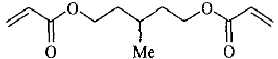 | 3 |
| 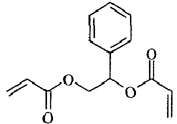 | 3.5 |
| 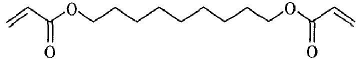 | 3.75 |
| 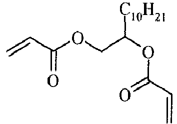 | 4.5 |
| 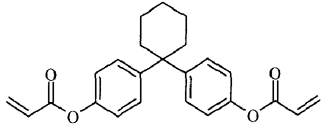 | 6 |
| 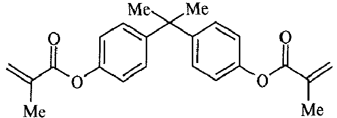 | 5.75 |
| 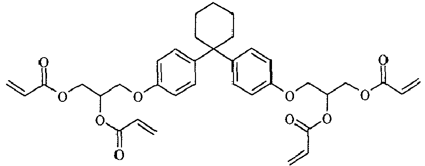 | 3.6 |
| 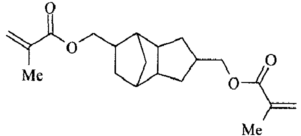 | 5 |
| 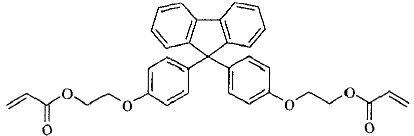 | 5.83 |
| 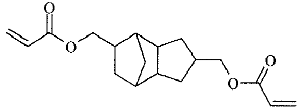 | 4.5 |
| 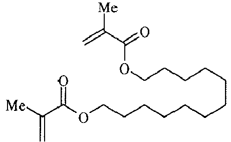 | 5 |
| 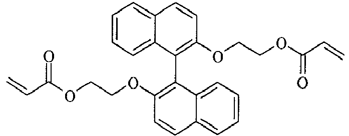 | 5 |
| 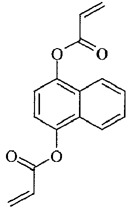 | 4 |
| 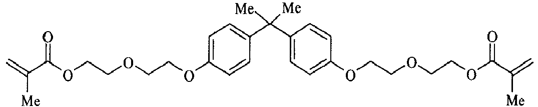 | 3.875 |

Particularly preferred monomers comprise at least one aromatic fragment in the structure, preferably selected from the group consisting of a substituted benzene ring and a substituted naphthalene ring.

### Colour Pigments

The free radical UV curable pigmented inkjet inks contain a colour pigment. Organic and/or inorganic pigments may be used.

The pigments may be black, white, cyan, magenta, yellow, red, orange, violet, blue, green, brown, mixtures thereof, and the like. This colour pigment may be chosen from those disclosed by HERBST, Willy, et al. Industrial Organic Pigments, Production, Properties, Applications. 3rd edition. Wiley - VCH , 2004. ISBN 3527305769.

Particular preferred pigments are C.I. Pigment Yellow 1, 3, 10, 12, 13, 14, 17, 55, 65, 73, 74, 75, 83, 93, 97, 109, 111, 120, 128, 138, 139, 150, 151, 154, 155, 175, 180, 181, 185, 194 and 213.

Particular preferred pigments are C.I. Pigment Red 17, 22, 23, 41, 48:1, 48:2, 49:1, 49:2, 52:1, 57:1, 88, 112, 122, 144, 146, 149, 170, 175, 176, 184, 185, 188, 202, 206, 207, 210, 216, 221, 248, 251, 254, 255, 264, 266, 270 and 272.

Particular preferred pigments are C.I. Pigment Violet 19, 23, 32, and 37.

Particular preferred pigments are C.I. Pigment Blue 15:1, 15:2, 15:3, 15:4, 15:6, 16, 56, 61 and (bridged) aluminium phthalocyanine pigments.

Particular preferred pigments are C.I. Pigment Orange 5, 13, 16, 34, 40, 43, 59, 66, 67, 69, 71 and 73.

Particular preferred pigments are C.I. Pigment Green 7 and 36.

Particular preferred pigments are C.I. Pigment Brown 6 and 7.

Suitable pigments include mixed crystals of the above particular preferred pigments. Mixed crystals are also referred to as solid solutions. For example, under certain conditions different quinacridones mix with each other to form solid solutions, which are quite different from both physical mixtures of the compounds and from the compounds themselves. In a solid solution, the molecules of the components enter into the same crystal lattice, usually, but not always, that of one of the components. The x-ray diffraction pattern of the resulting crystalline solid is characteristic of that solid and can be clearly differentiated from the pattern of a physical mixture of the same components in the same proportion. In such physical mixtures, the x-ray pattern of each of the components can be distinguished, and the disappearance of many of these lines is one of the criteria of the formation of solid solutions. A commercially available example is Cinquasia Magenta RT-355-D from BASF AG.

Carbon black is preferred as a black pigment. Suitable black pigments include carbon blacks such as Pigment Black 7 (e.g. Carbon Black MA8^{®} from MITSUBISHI CHEMICAL), Regal^{®} 400R, Mogul^{®} L, Elftex^{®} 320 from CABOT Co., or Carbon Black FW18, Special Black 250, Special Black 350, Special Black 550, Printex^{®} 25, Printex^{®} 35, Printex^{®} 55, Printex^{®} 90, Printex^{®} 150T from DEGUSSA. In a preferred embodiment, the carbon black pigment used is a pigment having less than 0.15% of toluene-extractable fraction using the method as described in section III, paragraph 5 of the Resolution AP(89) 1 dated 13 September 1989 published by the Council of Europe.

It is also possible to make mixtures of pigments. For example, in some inkjet ink application a neutral black inkjet ink is preferred and can be obtained e.g. by mixing a black pigment and a cyan pigment into the ink. Also pigments may be combined to enlarge the colour gamut of an ink set. The inkjet application may also require one or more spot colours. Silver and gold are often desired colours for making a product more attractive by giving it an exclusive appearance.

Also non-organic pigments may be present in the inks. Suitable pigments are C.I. Pigment Metal 1, 2 and 3. Illustrative examples of the inorganic pigments include titanium oxide, barium sulfate, calcium carbonate, zinc oxide, lead sulfate, yellow lead, zinc yellow, red iron oxide (III), cadmium red, ultramarine blue, prussian blue, chromium oxide green, cobalt green, amber, titanium black and synthetic iron black. However, care should be taken to prevent migration and extraction of heavy metals in food application. In the preferred embodiment no pigments are used which contain a heavy metal selected from the group consisting of arsenic, lead, mercury and cadmium. In a more preferred embodiment, no inorganic pigments are used in the inkjet ink with the exception of titanium oxide, and calcium carbonate.

Pigment particles in inkjet ink should be sufficiently small to permit free flow of the ink through the inkjet-printing device, especially at the ejecting nozzles. It is also desirable to use small particles for maximum colour strength and to slow down sedimentation.

The numeric average pigment particle size is preferably between 0.050 and 1 µm, more preferably between 0.070 and 0.300 µm and particularly preferably between 0.080 and 0.200 µm. Most preferably, the numeric average pigment particle size is no larger than 0.150 µm. An average particle size smaller than 0.050 µm is less desirable for decreased lightfastness, but mainly also because very small pigment particles or individual pigment molecules thereof may still be extracted in food packaging applications.

The numeric average pigment particle size of pigment particles is best determined with a Brookhaven Instruments Particle Sizer BI90plus based upon the principle of dynamic light scattering. The ink is then diluted, for example, with ethyl acetate to a pigment concentration of 0.002 wt%. The measurement settings of the BI90plus are: 5 runs at 23°C, angle of 90°, wavelength of 635 nm and graphics = correction function.

In the case of a white free radical UV curable pigmented inkjet ink, preferably a pigment with a refractive index greater than 1.60, preferably greater than 2.00, more preferably greater than 2.50 and most preferably greater than 2.60 is used. The white pigments may be employed singly or in combination.

Preferably titanium dioxide is used for the pigment with a refractive index greater than 1.60. Titanium oxide occurs in the crystalline forms of anatase type, rutile type and brookite type. The anatase type has a relatively low density and is easily ground into fine particles, while the rutile type has a relatively high refractive index, exhibiting a high covering power. Either one of these is usable in this invention. It is preferred to make the most possible use of characteristics and to make selections according to the use thereof. The use of the anatase type having a low density and a small particle size can achieve superior dispersion stability, ink storage stability and ejectability. At least two different crystalline forms may be used in combination. The combined use of the anatase type and the rutile type which exhibits a high colouring power can reduce the total amount of titanium oxide, leading to improved storage stability and ejection performance of ink.

For surface treatment of the titanium oxide, an aqueous treatment or a gas phase treatment is applied, and an alumina-silica treating agent is usually employed. Untreated-, alumina treated- or alumina-silica treated-titanium oxide are employable.

The numeric average particle diameter of the titanium oxide or other white pigments is preferably from 50 to 500 nm, more preferably from 150 to 400 nm, and most preferably from 200 to 350 nm. Sufficient hiding power cannot be obtained when the average diameter is less than 50 nm, and the storage ability and the jet-out suitability of the ink tend to be degraded when the average diameter exceeds 500 nm. The determination of the numeric average particle diameter is best performed by photon correlation spectroscopy at a wavelength of 633 nm with a 4mW HeNe laser on a diluted sample of the pigmented inkjet ink. A suitable particle size analyzer used was a Malvern™ nano-S available from Goffin-Meyvis. A sample can, for example, be prepared by addition of one drop of ink to a cuvet containing 1.5 mL ethyl acetate and mixed until a homogenous sample was obtained. The measured particle size is the average value of 3 consecutive measurements consisting of 6 runs of 20 seconds.

Generally pigments are stabilized in the dispersion medium by dispersing agents, such as polymeric dispersants or surfactants. However, the surface of the pigments can be modified to obtain so-called "self-dispersible" or "self-dispersing" pigments, i.e. pigments that are dispersible in the dispersion medium without dispersants.

The pigment is preferably used in a pigment dispersion used for preparing inkjet inks in an amount of 10 to 40 wt%, more preferably of 15 to 30 wt% based on the total weight of the pigment dispersion. In a curable inkjet ink the pigment is preferably present in an amount of 0.1 to 20 wt%, preferably 1 to 10 wt% based on the total weight of the inkjet ink.

### Polymeric Dispersants

Typical polymeric dispersants are copolymers of two monomers but may contain three, four, five or even more monomers. The properties of polymeric dispersants depend on both the nature of the monomers and their distribution in the polymer. Copolymeric dispersants preferably have the following polymer compositions:
- statistically polymerized monomers (e.g. monomers A and B polymerized into ABBAABAB);
- alternating polymerized monomers (e.g. monomers A and B polymerized into ABABABAB);
- gradient (tapered) polymerized monomers (e.g. monomers A and B polymerized into AAABAABBABBB);
- block copolymers (e.g. monomers A and B polymerized into AAAAABBBBBB) wherein the block length of each of the blocks (2, 3, 4, 5 or even more) is important for the dispersion capability of the polymeric dispersant;
- graft copolymers (graft copolymers consist of a polymeric backbone with polymeric side chains attached to the backbone); and
- mixed forms of these polymers, e.g. blocky gradient copolymers.

Suitable polymeric dispersants are listed in the section on "Dispersants", more specifically [0064] to [0070] and [0074] to [0077], in EP 1911814 A (AGFA GRAPHICS) incorporated herein as a specific reference.

The polymeric dispersant has preferably a number average molecular weight Mn between 500 and 30000, more preferably between 1500 and 10000.

The polymeric dispersant has preferably a weight average molecular weight Mw smaller than 100,000, more preferably smaller than 50,000 and most preferably smaller than 30,000.

The polymeric dispersant has preferably a polydispersity PD smaller than 2, more preferably smaller than 1.75 and most preferably smaller than 1.5.

Commercial examples of polymeric dispersants are the following:
- DISPERBYK™ dispersants available from BYK CHEMIE GMBH;
- SOLSPERSE™ dispersants available from LUBRIZOL;
- TEGO™ DISPERS™ dispersants from EVONIK;
- EDAPLAN™ dispersants from MÜNZING CHEMIE;
- ETHACRYL™ dispersants from LYONDELL;
- GANEX™ dispersants from ISP;
- DISPEX™ and EFKA™ dispersants from BASF;
- DISPONER™ dispersants from DEUCHEM.

Particularly preferred polymeric dispersants include Solsperse™ dispersants from LUBRIZOL, Efka™ dispersants from BASF and Disperbyk™ dispersants from BYK CHEMIE GMBH. Particularly preferred dispersants are Solsperse™ 32000, 35000 and 39000 dispersants from LUBRIZOL.

The polymeric dispersant is preferably used in an amount of 2 to 600 wt%, more preferably 5 to 200 wt%, most preferably 50 to 90 wt% based on the weight of the pigment.

### Dispersion Synergists

A dispersion synergist usually consists of an anionic part and a cationic part. The anionic part of the dispersion synergist exhibiting a certain molecular similarity with the colour pigment and the cationic part of the dispersion synergist consists of one or more protons and/or cations to compensate the charge of the anionic part of the dispersion synergist.

The dispersion synergist is preferably added in a smaller amount than the polymeric dispersant(s). The ratio of polymeric dispersant/dispersion synergist depends upon the pigment and should be determined experimentally. Typically the ratio wt% polymeric dispersant/wt% dispersion synergist is selected between 2:1 to 100:1, preferably between 2:1 and 20:1.

Suitable dispersion synergists that are commercially available include Solsperse™ 5000 and Solsperse™ 22000 from LUBRIZOL.

Particular preferred pigments for the magenta ink used are a diketopyrrolopyrrole pigment or a quinacridone pigment. Suitable dispersion synergists include those disclosed in EP 1790698 A (AGFA GRAPHICS), EP 1790696 A (AGFA GRAPHICS), WO 2007/060255 (AGFA GRAPHICS) and EP 1790695 A (AGFA GRAPHICS).

In dispersing C.I. Pigment Blue 15:3, the use of a sulfonated Cu-phthalocyanine dispersion synergist, e.g. Solsperse™ 5000 from LUBRIZOL is preferred. Suitable dispersion synergists for yellow inkjet inks include those disclosed in EP 1790697 A (AGFA GRAPHICS).

### Polymerization Inhibitors

The free radical UV curable inkjet inks may contain a polymerization inhibitor. Suitable polymerization inhibitors include phenol type antioxidants, hindered amine light stabilizers, phosphor type antioxidants, hydroquinone monomethyl ether commonly used in (meth)acrylate monomers, and hydroquinone, t-butylcatechol, pyrogallol may also be used.

Suitable commercial inhibitors are, for example, Sumilizer™ GA-80, Sumilizer™ GM and Sumilizer™ GS produced by Sumitomo Chemical Co. Ltd.; Genorad™ 16, Genorad™ 18 and Genorad™ 20 from Rahn AG; Irgastab™ UV10 and Irgastab™ UV22, Tinuvin™ 460 and CGS20 from BASF; Floorstab™ UV range (UV-1, UV-2, UV-5 and UV-8) from Kromachem Ltd, Additol™ S range (S100, S110, S120 and S130) from Cytec Surface Specialties.

Since excessive addition of these polymerization inhibitors will lower the ink sensitivity to curing, it is preferred that the amount capable of preventing polymerization is determined prior to blending. The amount of a polymerization inhibitor is preferably lower than 2 wt% of the total (inkjet) ink.

In a preferred embodiment, the polymerization inhibitor is a polymerizable inhibitor, preferably containing one or more acrylate groups for achieving good reactivity.

### Biocides

Suitable biocides for aqueous inkjet inks include sodium dehydroacetate, 2-phenoxyethanol, sodium benzoate, sodium pyridinethion-1-oxide, ethyl p-hydroxybenzoate and 1,2-benzisothiazolin-3-one and salts thereof.

Preferred biocides are Proxel™ GXL and Proxel™ Ultra 5 available from ARCH UK BIOCIDES and Bronidox™ available from COGNIS.

A biocide is preferably added in an amount of 0.001 to 3.0 wt.%, more preferably 0.01 to 1.0 wt. %, each based on the total weight of the aqueous inkjet ink.

### Humectants

The aqueous inkjet inks may contain a humectant.

Suitable humectants include triacetin, N-methyl-2-pyrrolidone, 2-pyrrolidone, glycerol, urea, thiourea, ethylene urea, alkyl urea, alkyl thiourea, dialkyl urea and dialkyl thiourea, diols, including ethanediols, propanediols, propanetriols, butanediols, pentanediols, and hexanediols; glycols, including propylene glycol, polypropylene glycol, ethylene glycol, polyethylene glycol, diethylene glycol, tetraethylene glycol, and mixtures and derivatives thereof. Preferred humectants are 2-pyrrolidone, glycerol and 1,2-hexanediol, since the latter were found to be the most effective for improving inkjet printing reliability in an industrial environment.

The humectant is preferably added to the aqueous inkjet ink in an amount of 0.1 to 35 wt% of the formulation, more preferably 1 to 30 wt% of the formulation, and most preferably 3 to 25 wt% of the aqueous inkjet ink.

### pH Adjusters

The aqueous inkjet inks may contain at least one pH adjuster. Suitable pH adjusters include NaOH, KOH, NEt₃, NH₃, HCl, HNO₃, H₂SO₄ and (poly)alkanolamines such as triethanolamine and 2-amino-2-methyl-1-propaniol. Preferred pH adjusters are triethanol amine, NaOH and H₂SO₄.

### Surfactants for Aqueous Colour Forming Inkjet Inks

The aqueous colour forming inkjet inks may contain at least one surfactant. The surfactant(s) can be anionic, cationic, non-ionic, or zwitterionic and are usually added in a total quantity less than 5 wt% based on the total weight of the inkjet ink and particularly in a total less than 2 wt% based on the total weight of the inkjet ink.

The one or more aqueous colour forming inkjet inks preferably have a surface tension between 18.0 and 45.0 mN/m at 25°C, more preferably between a surface tension between 21.0 and 39.0 mN/m at 25°C.

Suitable surfactants for the aqueous colour forming inkjet inks include fatty acid salts, ester salts of a higher alcohol, alkylbenzene sulfonate salts, sulfosuccinate ester salts and phosphate ester salts of a higher alcohol (for example, sodium dodecylbenzenesulfonate and sodium dioctylsulfosuccinate), ethylene oxide adducts of a higher alcohol, ethylene oxide adducts of an alkylphenol, ethylene oxide adducts of a polyhydric alcohol fatty acid ester, and acetylene glycol and ethylene oxide adducts thereof (for example, polyoxyethylene nonylphenyl ether, and SURFYNOL™ 104, 104H, 440, 465 and TG available from AIR PRODUCTS & CHEMICALS INC.).

Preferred surfactants are selected from fluoro surfactants (such as fluorinated hydrocarbons) and/or silicone surfactants.

The silicone surfactants are preferably siloxanes and can be alkoxylated, polyester modified, polyether modified, polyether modified hydroxy functional, amine modified, epoxy modified and other modifications or combinations thereof. Preferred siloxanes are polymeric, for example polydimethylsiloxanes. Preferred commercial silicone surfactants include BYK™ 333 and BYK™ UV3510 from BYK Chemie.

Particularly preferred commercial fluorosurfactants are Capstone™ FS3100 from DU PONT,Tivida™ FL2500 from MERCK and Thetawet™ FS8150 from NEOCHEM GMBH.

### Surfactants for Free Radical UV Curable Inkjet Inks

The free radical UV curable inkjet inks may contain at least one surfactant. The surfactant can be anionic, cationic, non-ionic, or zwitterionic and is preferably added in a total quantity less than 3 wt% based on the total weight of the ink and particularly in a total less than 1wt% based on the total weight of the free radical curable inkjet ink.

Preferred surfactants are selected from fluoro surfactants (such as fluorinated hydrocarbons) and silicone surfactants. The silicone surfactants are preferably siloxanes and can be alkoxylated, polyester modified, polyether modified, polyether modified hydroxy functional, amine modified, epoxy modified and other modifications or combinations thereof. Preferred siloxanes are polymeric, for example polydimethylsiloxanes.

Preferred commercial silicone surfactants include BYK™ 333 and BYK™ UV3510 from BYK Chemie.

In a preferred embodiment, the surfactant is a polymerizable compound.

Preferred polymerizable silicone surfactants include a (meth)acrylated silicone surfactant. Most preferably the (meth)acrylated silicone surfactant is an acrylated silicone surfactant, because acrylates are more reactive than methacrylates.

In a preferred embodiment, the (meth)acrylated silicone surfactant is a polyether modified (meth)acrylated polydimethylsiloxane or a polyester modified (meth)acrylated polydimethylsiloxane.

Preferred commercially available (meth)acrylated silicone surfactants include: EbecryI™ 350 , a silicone diacrylate from Cytec; the polyether modified acrylated polydimethylsiloxane BYK™ UV3500 and BYK™ UV3530, the polyester modified acrylated polydimethylsiloxane BYK™ UV3570, all manufactured by BYK Chemie; Tego™ Rad 2100, Tego™ Rad 2200N, Tego™ Rad 2250N, Tego™ Rad 2300, Tego™ Rad 2500, Tego™ Rad 2600, and Tego™ Rad 2700, Tego™ RC711 from EVONIK; Silaplane™ FM7711, Silaplane™ FM7721, Silaplane™ FM7731, Silaplane™ FM0711, Silaplane™ FM0721, Silaplane™ FM0725, Silaplane™ TM0701, Silaplane™ TM0701T all manufactured by Chisso Corporation; and DMS-R05, DMS-R11, DMS-R18, DMS-R22, DMS-R31, DMS-U21, DBE-U22, SIB1400, RMS-044, RMS-033, RMS-083, UMS-182, UMS-992, UCS-052,

### Inkjet Printing Devices

The inkjet inks may be jetted by one or more print heads ejecting small droplets of ink in a controlled manner through nozzles onto a packaging surface, which is moving relative to the print head(s).

A preferred print head for the inkjet printing system is a piezoelectric head. Piezoelectric inkjet printing is based on the movement of a piezoelectric ceramic transducer when a voltage is applied thereto. The application of a voltage changes the shape of the piezoelectric ceramic transducer in the print head creating a void, which is then filled with ink. When the voltage is again removed, the ceramic expands to its original shape, ejecting a drop of ink from the print head. However the inkjet printing method according to the present invention is not restricted to piezoelectric inkjet printing. Other inkjet print heads can be used and include various types, such as a continuous type and thermal, electrostatic and acoustic drop on demand type. The piezoelectric print head is preferably a through flow print head for improving the reliability of inkjet printing in an industrial environment.

The inkjet print head normally scans back and forth in a transversal direction across the moving ink-receiver surface. Often the inkjet print head does not print on the way back. Bi-directional printing is preferred for obtaining a high areal throughput.

For printing on packaging, the preferred inkjet printing method is by a "single pass printing process", which can be performed by using page wide inkjet print heads or multiple staggered inkjet print heads which cover the entire width of the packaging surface. In a single pass printing process the inkjet print heads usually remain stationary and the substrate surface is transported under the inkjet print heads.

### Drying Devices

When aqueous inkjet inks are used, the inkjet printer contains a drying device for removing water and organic solvents in the inkjet printed image.

Suitable drying devices include devices circulating hot air, ovens, and devices using air suction.

A pre-heating device may be included in the inkjet printing device for heating the substrate prior to jetting. The pre-heating device may be an infrared radiation source as described here below, or may be a heat conduction device, such as a hot plate or a heat drum. A preferred heat drum is an induction heat drum.

A preferred pre-heating device uses Carbon Infrared Radiation (CIR) to heat the outside of the substrate quickly. Another preferred drying device is a NIR source emitting near infrared radiation. NIR-radiation energy quickly enters into the depth of the inkjet ink layer and removes water and solvents out of the whole layer thickness, while conventional infrared and thermo-air energy predominantly is absorbed at the surface and slowly conducted into the ink layer, which results usually in a slower removal of water and solvents.

The drying device may be, at least in part, arranged in combination with the print head of the inkjet printer, travelling therewith so that the radiation is applied very shortly after jetting. In such a case, the inkjet printer is preferably equipped with some kind of infrared radiation source, e.g. an infrared light source, such as infrared laser diodes or infrared LEDs.

A preferred effective infrared radiation source has an emission maximum between 0.8 and 1.5 µm. Such an infrared radiation source is sometimes called a NIR radiation source or NIR dryer. In a preferred form the NIR radiation source is in the form of NIR LEDs, which can be mounted easily on a shuttling system of a plurality of inkjet print heads in a multi-pass inkjet printing device.

The skilled person knows that he should control the infrared radiation of the drying device in such a manner that the ink layer is dried, but no colour formation is started.

### UV Curing Devices

The UV curable inkjet inks are cured by exposing them to ultraviolet radiation.

In inkjet printing, the curing means may be arranged in combination with the print head of the inkjet printer, travelling therewith so that the curable composition is exposed to curing radiation very shortly after been jetted.

In such an arrangement it can be difficult to provide a small enough radiation source connected to and travelling with the print head. Therefore, a static fixed radiation source may be employed, e.g. a source of curing UV-light, connected to the radiation source by means of flexible radiation conductive means such as a fiber optic bundle or an internally reflective flexible tube.

Alternatively, the actinic radiation may be supplied from a fixed source to the radiation head by an arrangement of mirrors including a mirror upon the radiation head.

The source of radiation arranged not to move with the print head, may also be an elongated radiation source extending transversely across the ink-receiver surface to be cured and adjacent the transverse path of the print head so that the subsequent rows of images formed by the print head are passed, stepwise or continually, beneath that radiation source.

Any ultraviolet light source, as long as part of the emitted light can be absorbed by the photo-initiator or photo-initiator system, may be employed as a radiation source, such as, a high or low pressure mercury lamp, a cold cathode tube, a black light, an ultraviolet LED, an ultraviolet laser, and a flash light. Of these, the preferred source is one exhibiting a relatively long wavelength UV-contribution having a dominant wavelength of 300-400 nm. Specifically, a UV-A light source is preferred due to the reduced light scattering therewith resulting in more efficient interior curing.

UV radiation is generally classed as UV-A, UV-B, and UV-C as follows:
- UV-A: 400 nm to 320 nm
- UV-B: 320 nm to 290 nm
- UV-C: 290 nm to 100 nm.

Furthermore, it is possible to cure the image using, consecutively or simultaneously, two light sources of differing wavelength or illuminance. For example, the first UV-source can be selected to be rich in UV-C, in particular in the range of 260 nm-200 nm. The second UV-source can then be rich in UV-A, e.g. a gallium-doped lamp, or a different lamp high in both UV-A and UV-B. The use of two UV-sources has been found to have advantages e.g. a fast curing speed and a high curing degree.

For facilitating curing, the inkjet printer often includes one or more oxygen depletion units. The oxygen depletion units place a blanket of nitrogen or other relatively inert gas (e.g. CO₂), with adjustable position and adjustable inert gas concentration, in order to reduce the oxygen concentration in the curing environment. Residual oxygen levels are usually maintained as low as 200 ppm, but are generally in the range of 200 ppm to 1200 ppm.

### Heat Treatment

A colour image is formed by a heat treatment of the at least one jetted colour forming inkjet ink. The heat treatment is applied by direct heating or by infrared radiation, preferably by infrared radiation.

In a direct heat treatment, the heat is applied by heat conduction or convection. In an indirect heat treatment, an optothermal converting agent absorbs infrared radiation and converts that radiation into heat.

The heat treatment is preferably carried out using an infrared laser.

The infrared laser may be a continuous wave or a pulsed laser.

A preferred infrared laser is a CO₂ laser. A CO₂ laser is a continuous wave, high power laser having an emission wavelength of typically 10600 nm (10.6 micrometer).

An advantage of using a carbon dioxide (CO₂) laser is the fact that laser markable sub-pixels without an optothermal converting agent may be used. This may result in an improved background colour as optothermal converting agents may give rise to unwanted colouration of the background.

A disadvantage of using a carbon dioxide (CO₂) laser is the rather long emission wavelength limiting the resolution of the marked image that can obtained.

Another preferred continuous wave laser is an optical pumped semiconductor laser. Optically pumped semiconductor lasers have the advantage of unique wavelength flexibility, different from any other solid-state based laser. The output wavelength can be set anywhere between about 920 nm and about 1150 nm. This allows a perfect match between the laser emission wavelength and the absorption maximum of an optothermal converting agent.

A preferred pulsed laser is a solid state Q-switched laser. Q-switching is a technique by which a laser can be made to produce a pulsed output beam. The technique allows the production of light pulses with extremely high peak power, much higher than would be produced by the same laser if it were operating in a continuous wave (constant output) mode, Q-switching leads to much lower pulse repetition rates, much higher pulse energies, and much longer pulse durations.

The advantage of using a laser having a wavelength between 800 and 1200 is the higher resolution that can be obtained, compared to the CO₂ laser described above.

When two or more lasers are used to laser mark two or more laser markable composition , the difference of the emission wavelengths of the two or more infrared laser is preferably at least 100 nm, more preferably at least 150 nm, most preferably at least 200 nm.

### Examples

### Materials

All materials used in the following examples were readily available from standard sources such as Aldrich Chemical Co. (Belgium) and Acros (Belgium) unless otherwise specified. The water used in the examples is demineralized water.

**SDS™ Ultra Pure** is Sodium dodecyl sulfate commercially available from AppliChem GmbH

**LD-1** is Wincon™ 205, a black leuco dye supplied by Connect Chemicals, having the following structure:

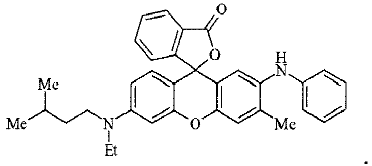

**LD-2** is Pergascript™ Black IR, a black leuco dye supplied by BASF, having the following structure:

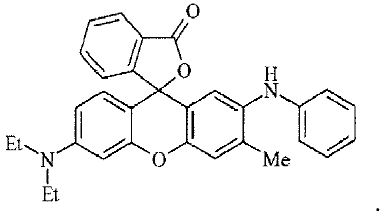

**LD-3** is Pergascript™ black 2C, a black leuco dye supplied by BASF, having the following structure:

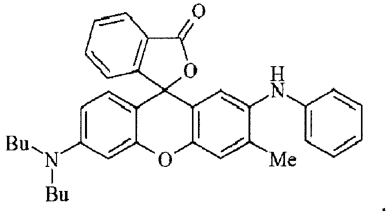

**LD-4** is a red leuco dye supplied by Molekula Fine Chemicals, having the following structure:

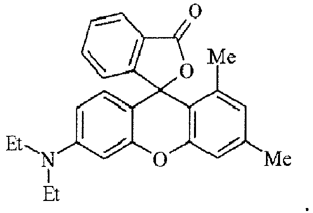

**LD-5** is Mitsui™ GN169, a blue leuco dye supplied by Mitsui, having the following structure:

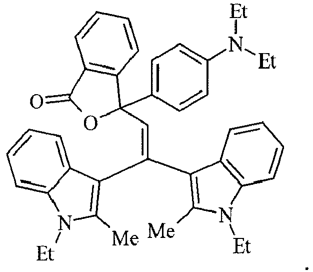

**LD-6** is Mitsui G2, a cyan leuco dye supplied by Mitsui, having the following structure:

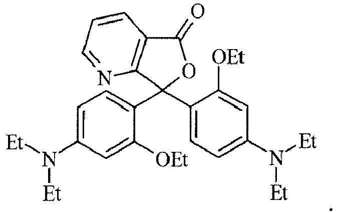

**LD-7** is Wincon™ Red, a leucodye (CASRN 50292-95-0) commercially available from Connect Chemicals.

**LD-01** is a leuco dye prepared according to the following scheme:

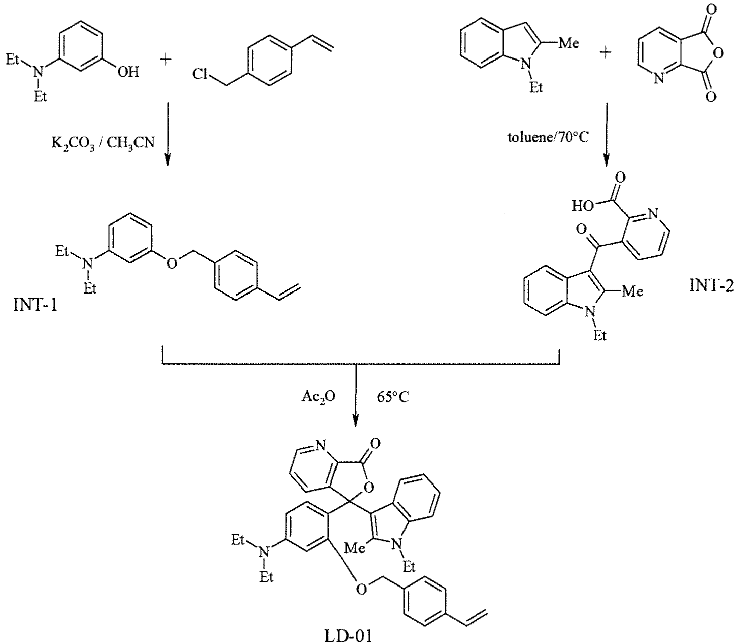

### Synthesis of Diethyl-[3-(4-vinyl-benzyloxy)-phenyl]-amine (INT-1)

10 g (63 mmol) 3-diethylamino-phenol was dissolved in 100 ml acetonitrile. 29.5 g (0.189 mol) potassium carbonate was added followed by the addition of 10.6 g (63 mmol) 4-chloromethyl-styrene. The mixture was heated to reflux for 9 hours. An additional 500 µl 4-chloromethyl-styrene was added and the reaction was allowed to continue for an additional one and a half hour. The reaction mixture was allowed to cool down to room temperature and the solvent was removed under reduced pressure. The residue was recrystallazed twice from isopropanol. 7.5 g of diethyl-[3-(4-vinyl-benzyloxy)-phenyl]-amine was isolated (yield : 42 %)

### Synthesis of 3-(1-Ethyl-2-methyl-1H-indole-3-carbonyl)-pyridine-2-carboxylic acid (INT-2)

7.4 g (50 mmol) furo[3,4-b]pyridine-5,7-dione was added to 50 ml toluene. 8.2 g (50 mmol) 1-ethyl-2-methyl-1 H-indole was added dropwise and the mixture was heated to 74°C. The reaction was allowed to continue for five hours at 70°C. The reaction mixture was allowed to cool down to room temperature and the precipitated crude 3-(1-ethyl-2-methyl-1H-indole-3-carbonyl)-pyridine-2-carboxylic acid was isolated by filtration. The crude 3-(1-ethyl-2-methyl-1H-indole-3-carbonyl)-pyridine-2-carboxylic acid was recrystallized from isopropanol. 7.5 g of 3-(1-ethyl-2-methyl-1H-indole-3-carbonyl)-pyridine-2-carboxylic acid was isolated (yield : 50%).

### Synthesis of LD-01

7 g (23 mmol) 3-(1-ethyl-2-methyl-1 H-indole-3-carbonyl)-pyridine-2-carboxylic acid was dissolved in 100 ml acetic anhydride. 6.5 g (23 mmol) diethyl-[3-(4-vinyl-benzyloxy)-phenyl]-amine was added and the reaction was allowed to continue for 16 hours at 65°C. The reaction mixture was allowed to cool down to room temperature. Leuco dye monomer LD-01 was isolated by filtration washed with 100 ml water and dried. 9 g of leuco dye monomer-1 was isolated (yield : 69%).

**LD-02** is a leuco dye prepared according to the following scheme:

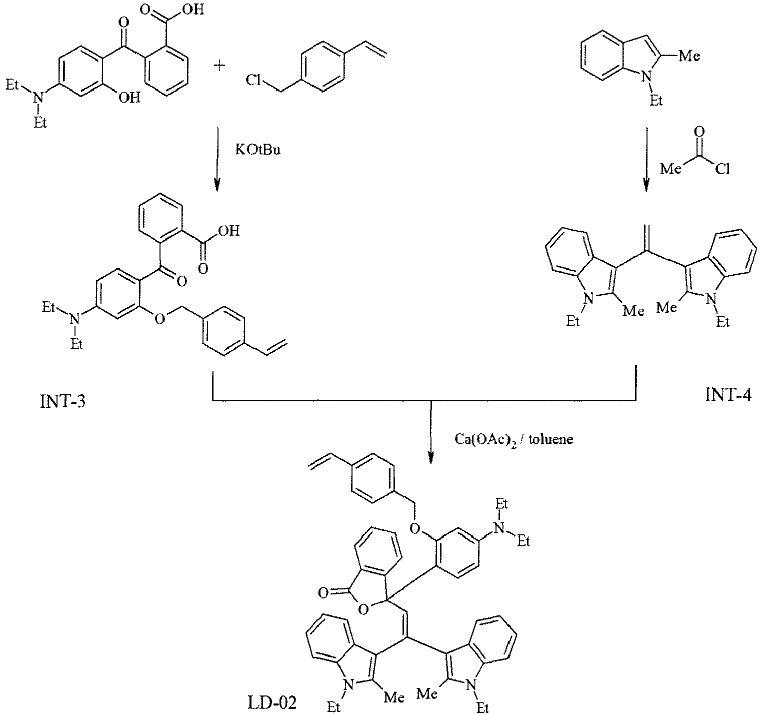

### Synthesis of 2-[4-Diethylamino-2-(4-vinyl-benzyloxy)-benzoyl]-benzoic acid (INT-3)

31.3 g (0.1 mol) 2-(4-diethylamino-2-hydroxy-benzoyl)-benzoic acid was dissolved in 300 ml dimethylacetamide. 23.0 g (0.204 mol) potassium tert.-butanolate was added and the mixture was stirred until complete dissolution. 32 g (0.21 mol) 4-chloromethyl-styrene was added and the mixture was heated to 70°C for two hours. The reaction mixture was allowed to cool down to 40°C and the mixture was added to 1.5 litre water. The precipitated product was isolated and redissolved in 300 ml methanol. 25 ml of a 5N NaOH solution was added and the mixture was heated to reflux for 3 hours. 500 ml water was slowly added and the mixture was allowed to cool down to 40°C. 25 ml acetic acid was added. The crude 2-[4-diethylamino-2-(4-vinyl-benzyloxy)-benzoyl]-benzoic acid precipitated from the medium, was isolated by filtration and washed with water. The crude 2-[4-diethylamino-2-(4-vinyl-benzyloxy)-benzoyl]-benzoic acid was dissolved in 300 ml methanol and precipitated with 1.5 litre water. 2-[4-Diethylamino-2-(4-vinyl-benzyloxy)-benzoyl]-benzoic acid was isolated by filtration and dried. The dried 2-[4-diethylamino-2-(4-vinyl-benzyloxy)-benzoyl]-benzoic acid was dissolved in 200 ml ethylacetate upon reflux. 600 ml hexane was added and the mixture was allowed to cool down to room temperature. 2-[4-Diethylamino-2-(4-vinyl-benzyloxy)-benzoyl]-benzoic acid was isolated by filtration and dried. 23 g of 2-[4-diethylamino-2-(4-vinyl-benzyloxy)-benzoyl]-benzoic acid was isolated (yield : 53%).

### Synthesis of 1-Ethyl-2-methyl-3-[1-(1-ethyl-2-methyl-1 H-indol-3-yl)-vinyl]-1H-indole (INT-4)

8.0 g (50 mmol) 1-ethyl-2-methyl-1H-indole was dissolved in 7.5 ml acetic anhydride. 1.97 g (25 mmol) acetyl chloride was added and the reaction was allowed to continue at 55°C for four hours. The reaction mixture was directly used further without further purification.

### Synthesis of leuco dye monomer LD-02

To the reaction mixture of step 2, 13 ml toluene was added, followed by the addition of 4.4 g (25 mmol) calcium acetate hydrate and 10.8 g (25 mmol) 2-[4-diethylamino-2-(4-vinyl-benzyloxy)-benzoyl]-benzoic acid. The reaction was allowed to continue for two hours at 60°C. The reaction mixture as allowed to cool down to room temperature. 300 ml toluene, 200 ml water and 19 g of a 10 N NaOH solution were added. The mixture was stirred for 30 minutes at 60°C. The toluene fraction was isolated,washed with 300 ml water, dried over MgSO₄ and evaporated under reduced pressure. The crude leuco dye monomer-2 was isolated by preparative column chromatography on a Graceresolv RS80 column, using a gradient elution from 100 % methylene chloride to methylene chloride/ethyl acetate 80/20. 8 g of leuco dye monomer-2 was isolated (yield : 46 %).

**LD-DISP-01** is a dispersion of the leuco dye LD-04 and was prepared as follows:
100 g LD-04, 200 g of a 5 wt% solution of Aerosol OT-100 in water and 2 g of a 5 wt% solution of 1,2-benzisothiazol-3(2H)-one, potassium salt in water were mixed into 198 g water using a DISPERLUX™ dispenser. Stirring was continued for 30 minutes. The vessel was connected to a NETZSCH MiniZeta mill filled with 900 g of 0.4 mm yttrium stabilized zirconia beads ("high wear resistant zirconia grinding media" from TOSOH Co.). The mixture was circulated over the mill for 67 minutes (residence time of 20 minutes) and a rotation speed in the mill of about 10.4 m/s. During the complete milling procedure the content in the mill was cooled to keep the temperature below 60°C. After milling, the dispersion was discharged into a vessel. The resulting concentrated dispersion exhibited an average particle size of 193 nm as measured with a Malvern™ nano-S and a viscosity of 5 mPa.s at 25°C and at a shear rate of 10 s⁻¹.

**LD-DISP-02** is a dispersion of the leuco dye LD-07 and was prepared as follows:
10 g LD-0-7, 20 g of a 5 wt% solution of Aerosol OT-100 in water, 0.375 g of a 8 wt% solution of sodium hydroxide in water and 0.2 g of a 5 wt% solution of 1,2-benzisothiazol-3(2*H*)-one, potassium salt in water were mixed into 19.425 g water and introduced into a 100 mL plastic container. The container was filed with 160 g of 3 mm yttrium stabilized zirconia beads ("high wear resistant zirconia grinding media" from TOSOH Co.). The container was sealed and placed on rotating rolls for 7 days. After roll milling, the dispersion exhibited an average particle size of 265 nm as measured with a Malvern™ nano-S.

**CCE** is Hydran APX-101 H, a polyester urethane (45 %) from DIC.

**Resorcinol** is commercially available from Sumitomo Chemicals.

**Par** is a dimethyltrimethylolamine formaldehyde resin from Cytec industries.

**PAR-sol** is a 40 wt% aqueous solution of Par.

**PEA** is Tospearl™ 120 from Momentive Performance Materials.

**PEA-sol** is a 10 wt% (50/50) aqueous/ethanol dispersion of PEA.

**DowfaxTM 2A1** from Pilot Chemicals C is a Alkyldiphenyloxide disulfonate (4.5%wt).

**DOW-sol** is a 2.5 wt% solution of Dowfax™2A in isopropanol.

**Surfynol™ 420** from Air Products is a non ionic surfactant.

**Surfynsol** is a 2.5 wt% solution of Surfynol™ 420 in isopropanol.

**Sunvac™ HH** is a copolymer of 86 wt% vinyl chloride and 14 wt% vinyl acetate provided by Yantal Suny Chem International Co., Ltd, China.

**Tospearl™ 145** is available from Momentive Performance materials.

**Tinogard™ AS**, a UV absorber commercially available from BASF.

**PET-C** is polyethylenterephtalate substrate prepared as follows:
first a coating composition SUB-1 was prepared by mixing the components according to the following Table 13.

**Table 13**

| **wt% of components** | **SUB-1** |
|---|---|
| water | 69.44 |
| CCE | 15.40 |
| Resorcinol | 12.55 |
| PAR-sol | 0.57 |
| PEA-sol | 0.68 |
| DOW-sol | 0.68 |
| Surfynsol | 0.68 |

A 1100 µm thick polyethylene terephthalate sheet was first longitudinally stretched and then coated on both sides with the coating composition SUB-1 at a wet coating thickness of 10 µm. After drying, the longitudinally stretched and coated polyethylene terephthalate sheet was transversally stretched to produce a double side subbed 63 µm thick sheet PET-C, which was transparent and glossy. Then an outer layer was prepared by coating the coating solution OUT-1 shown in Table 14 on one side of the PET-C foil at a wet coating thickness of 30 µm and dried at 90°C during 6 minutes.

**Table 14**

| **Ingredient (g)** | **OUT-1** |
|---|---|
| MEK | 87.85 |
| Sunvac™ HH | 10.60 |
| Tospearl™ 145 | 0.02 |
| Tinogard™ AS | 1.50 |

**Takenate™ D110N** is a trifunctional isocyanate, supplied by Mitsui.

**Tinuvin™ 928** is a UV absorber supplied by BASF, having the following structure:

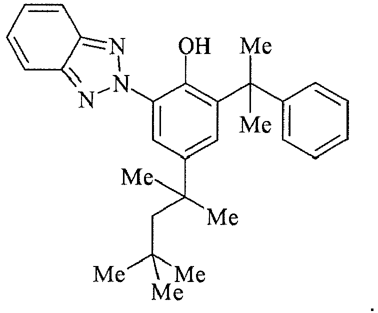

**Olfine™ E1010** was supplied by Nissin Chemicals.

**Bykjet™ 9152** is a polymer dispersing agent supplied by BYK.

**IR-1** is an infrared dye, having the following structure:

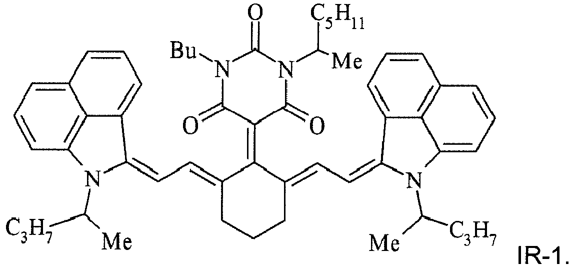

The infrared dye IR-1 was prepared according to the synthetic methodology, disclosed in EP 2463109 A (AGFA).

**DEV-1** is a zinc salicylate complex supplied by Sanko Chemicals Europe, having the following structure:

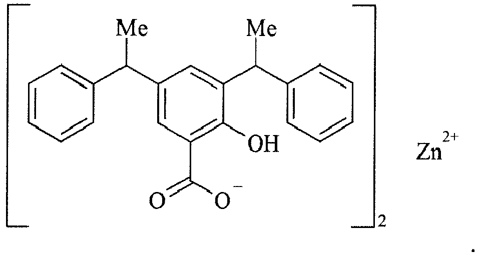

**DEV-2** is a bisphenol compound supplied by TCI Europe, having the following structure:

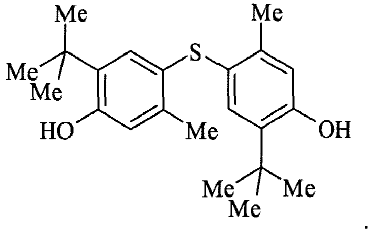

**DEV-3** is Lowinox™ 22M46, supplied by Chemtura, having the following structure:

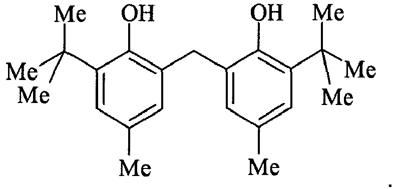

**Mowiol™ 488** is a polyvinyl alcohol supplied by Hoechst.

**Marlon™ A365** is an anionic surfactant supplied by Sasol.

**Tricresyl phosphate** was supplied by Lanxess.

**Proxel™ Ultra 5** is a biocide supplied by Avecia.

**Alkanol™ XC** is an anionic surfactant, supplied by Dupont.

**CB-01**, is Cab-O-Jet 300, a carbon black dispersion from CABOT CORPORATION, 300 times diluted.

**Daran™ 8100**, is a vinylidene copolymer -methyl acrylate polymer dispersion in water (60 wt%), commercially available from OWENSBORO SPECIALTY POLYMERS.

**Buffer (pH 9)** is a phospatebuffer (0.25M NaH₂PO₄).

**DR306** is a surfactant solution according to Table 15

**Table 15**

| **g of component** | **DR306** |
|---|---|
| Chemguard™ S228 | 52.6 |
| Chemguard™ S550 | 52.6 |
| Isopropanol | 473.0 |
| water | 431.0 |

**Chemguard™ S228** is a blend of fluoro/silicone surfactants from CHEMGUARD INC.

**Chemguard™ S550** is a short-chain perfluoro-based ethoxylated nonionic fluorosurfactant from CHEMGUARD INC.

### Measurement Methods

### 1. Average Particle Size

Unless otherwise specified, the average particle size was measured using a Brookhaven BI-90 Particle sizer.

### 2. Viscosity

The viscosity of the inkjet ink was measured using a Brookfield DV-II+ viscometer at 25°C at 12 rotations per minute (RPM) using a CPE 40 spindle. This corresponds to a shear rate of 90 s⁻¹.

### 3. Surface Tension

The static surface tension of the inkjet inks was measured with a KRÜSS tensiometer K9 from KRÜSS GmbH, Germany at 25°C after 60 seconds.

### Example 1

This example illustrates an aqueous colour forming inkjet ink wherein the diffusion hindered leuco dye is covalently bonded to polymeric particles.

### Preparation Diffusion Hindered Leuco Dyes LX-01 and LX-02

A polymer emulsion was prepared by means of a seeded emulsion polymerisation, wherein part of the monomers were brought into the reactor together with the surfactant before any initiator was added. All surfactant (3.5% relative to the total monomer amount) was added to the reactor before the reaction was started.

In a double-jacketed reactor of 700 ml, 1.12 gram SDS™ Ultra Pure and 206.39 gram of water was added. The reactor was put under an inert atmosphere by flushing with nitrogen. The reactor was then heated to 75°C. The monomer mixture used for preparing the seed was weighed in a dropping funnel, i.e. 1.06 gram of styrene, and 0.54 gram of acrylonitrile. When the surfactant solution reached 75°C, the seed monomer mixture was added instantaneously. The reactor was then heated for 15 minutes at 75°C. Subsequently 5.27 gram of a 2% aqueous solution of sodium persulfate was added (50% of the total initiator amount). Subsequently the reactor was heated during 30 minutes to 80°C. When the reactor reached 80°C, the monomer and initiator dosage was started. The monomer mixture of 19.92 gram of styrene and 8.83 gram of acrylonitrile and 1.6 gram of LD-01 was added during 3 hours. Simultaneously during the monomer addition, an aqueous persulfate solution was added (5.27 gram of a 2% aqueous solution of sodium persulfate). After the monomer dosing had finished, the reactor was kept at 80°C for 1 hour. Residual monomer was removed by vacuum distillation for 1 hour at 80°C and then the reactor was cooled to 20°C. The product was filtered using a 5 micron filter, resulting in the diffusion hindered leuco dye dispersion LX-01 having a solid content of 12.1%, a pH of 4.6 and an average particle size of 37 nm.

LX-02 was prepared in the same manner as LX-01 except that LD-02 was used instead of LD-01. LX-02 had a solid content of 11.8%, a pH of 4.38 and an average particle size of 35 nm.

### Preparation Aqueous Colour Forming Inkjet Inks

The diffusion hindered leuco dyes LX-01 and LX-02 and the colour developing agent precursor Daran™ 8100 were used to formulate the aqueous colour forming inkjet ink I-1 and I-2 according to Table 16. The leuco dye dispersions LD-DISP-01 and LD-DISP-02 used to prepare the diffusion hindered leuco dyes LX-01 and LX-02 were used to formulate an aqueous colour forming inkjet ink C-1 according to Table 16.

**Table 16**

| **g of component** | **C-1** | **I-1** | **I-2** |
|---|---|---|---|
| water | 9.40 | --- | --- |
| Buffer (pH 9) | 5.00 | --- | --- |
| Daran™ 8100 | 19.50 | 18.00 | 18.00 |
| NaOH (81 g/L) | 0.20 | 0.30 | 0.40 |
| LD-DISP-01 | 7.60 | --- | --- |
| LD-DISP-02 | 1.00 | --- | --- |
| LX-01 | --- | 80.00 | --- |
| LX-02 | --- | --- | 80.00 |
| CB-01 | 5.50 | 0.46 | 0.46 |
| DR306 | 2.00 | 1.00 | 1.00 |

The aqueous colour forming inkjet inks were then coated on the side of the PET-C foil provided with SUB-1 layer at a wet coating thickness of 30 µm and dried at 90°C during 6 minutes.

### Evaluation and Results

The samples were then laser marked using a Muehlbauer™ CL 54 equipped with a Rofin™ RSM Powerline™ E laser (10 W) (1064 nm, 35 kHz).

The optical density of the laser marked areas were measured in reflection using a spectrodensitometer type Gretag™ Macbeth™ SPM50 using a visual filter.

To test the UV stability, the laminated samples were kept in a weathering cabinet equipped with a Xenon lamp for 72 hours after which the increase of the background density (ΔDmin) is measured.

The maximum optical densities (ODmax), the background optical densities (ODmin) and the increase of the background density upon UV exposure are shown in Table 17.

**Table 17**

| **Sample** | **ODmax** | **ODmin** | **ΔDmin** |
|---|---|---|---|
| **C-1** | 1.8 | 0.1 | > 1.0 |
| **I-1** | 1.2 | 0.1 | 0.1 |
| **I-2** | 1.3 | 0.2 | 0.0 |

From Table 17, it can be seen that all samples have the desired maximum optical density higher than 1.0, but that the samples prepared with the aqueous colour forming inkjet ink I-1 and I-2 exhibited superior UV stability.

### Example 2

This example illustrates an aqueous colour forming inkjet ink wherein the diffusion hindered leuco dye is included in the core of capsules composed of a polymeric shell surrounding a core.

### Preparation of Capsules CAPS-1

5 g of LD-1, 1.2 g of LD-2, 3 g of LD-3, 4.9 g of LD-4, 4.9 g of LD-5, 2.4 g of LD-6 and 2.1 g of Tinuvin™ 928 were dissolved in 32 ml ethyl acetate by heating until reflux. The mixture was allowed to cool down to 60°C and 23.1 g Takenate™ D110N and a solution of 50 mg of IR-1 in 2 ml methylene chloride were added. The mixture was allowed to cool down to room temperature. In a separate vessel, a solution of 8 g Bykjet™ 9152 and 0.12 g Olfine™ E1010 was prepared. This ethyl acetate solution was added to the aqueous solution under high shear, using a T25 digital Ultra-Turrax with an 18N rotor available from IKA at 24000 rpm for 5 minutes. The ethyl acetate was removed under reduced pressure, followed by removal of 20 g water to completely remove residual ethyl acetate. 20 ml water was added and the mixture was heated to 50°C for 16 hours. After cooling down to room temperature, the mixture was filtered over a 1µm filter. The average capsule size was estimated using an optical microscope to be about 400 nm.

### Preparation of Colour Developing Agent CDA-1

A solution of 9.75 g DEV-2, 9.75 g DEV-3, 30 g Tinuvin™ 928, 7.5 g tricresyl phosphate, 3.75 g diethyl maleate and 165 g DEV-1 in 450 g ethyl acetate was prepared by heating to 50°C.

In a separate vessel, a solution of 50 Mowiol™ 488, 7.5 g Marlon™ A365 and 4 g Proxel™ Ultra 5 in 715 ml water was prepared. The ethyl acetate solution was added to the aqueous solution using a HOMO-REX high speed homogenizing mixer. The mixture was stirred further for 5 minutes followed by removal of the ethyl acetate under reduced pressure. The particle size was measured using a Malvern nano-S. CDA-1 had an average particle size of 207 nm.

### Preparation Aqueous Colour Forming Inkjet Ink I-3

The diffusion hindered leuco dye CAPS-1 and the colour developing agent CDA-1 were used to formulate the aqueous colour forming inkjet ink I-3 according to Table 18. All weight percentages (wt%) are based on the total weight of the inkjet ink.

**Table 18**

| **w% of component** | **I-3** |
|---|---|
| CDA-1 | 6.77 |
| CAP-1 | 3.82 |
| Glycerol | 42.16 |
| Alkanol™ XC | 1.00 |
| water | 46.25 |

The ink was filtered over a 1.6 µm filter. The ink had a surface tension of 30 mN/m and a viscosity of 10 mPas at 22°C.

The aqueous colour forming inkjet ink I-3 was jetted using a Dimatix™ DMP2831 system, equipped with a standard Dimatix™ 10 pl print head. The inks were jetted at 22°C, using a firing frequency of 15 kHz, a firing voltage of 25 V and a standard waveform on a paper substrate to form a uniform square of 7 cm x 7cm, i.e. an invisible image (9). An additional square was printed on an Agfajet™ Transparency Film, supplied by Agfa.

An optically pumped semiconductor laser emitting at 1064 nm (Genesis MX 1064-10000 MTM from COHERENT) was used for producing a black wedge of 0.6 cm x 0.6 cm square boxes of increasing optical density in the squares inkjet printed on both substrates. The laser was used at a power level of 4 W measured at the sample, a dither of 0.025, a scan speed of 200 mm/s and at a pulse repetition rate of 10 kHz. A black wedge, i.e. a visible image (7), was laser marked in both inkjet printed squares.

**Reference signs list**

| | |
|---|---|
| 1 | Empty bottle |
| 2 | Inkjet printing |
| 3 | Inkjet printed image |
| 4 | Box for expiration date |
| 5 | Box for QR code |
| 6 | Bottle filling |
| 7 | Filled bottle |
| 8 | Heat treatment |
| 9 | Coded filled bottle |
| 10 | Expiration date |
| 11 | QR code |

## Claims

1. A method for manufacturing a packaging including the steps of:
- jetting one or more free radical UV curable pigmented colour inkjet inks from an inkjet ink set on the packaging;
- UV curing the one or more jetted free radical UV curable pigmented colour inkjet inks;
- jetting at least one colour forming inkjet ink from the inkjet ink set on the packaging or on the one or more UV cured free radical UV curable pigmented colour inkjet inks; and
- forming a colour image by a heat treatment of the at least one jetted colour forming inkjet ink.

2. The method according to claim 1, wherein the heat treatment is performed by infrared radiation.

3. The method according to claim 1 or 2, wherein the UV curing is performed using UV LEDs having an emission between 350 nm and 400 nm.

4. The method according to any one of claims 1 to 3, wherein the inkjet ink set is an inkjet ink set according to any one of claims 5 to 13.

5. An inkjet ink set including one or more free radical UV curable pigmented colour inkjet inks and at least one colour forming inkjet inks capable of forming a colour upon a heat treatment, wherein the at least one colour forming inkjet ink is selected from:
a) an aqueous colour forming inkjet ink containing a leuco dye; a colour developing agent or a colour developing agent precursor; and an optothermal converting agent selected from the group consisting of an infrared dye, an infrared pigment and a carbon black;
b) a free radical curable colour forming inkjet ink containing a free radical photoinitiator; a free radical polymerizable compound; a leuco dye; a colour developing agent or a colour developing agent precursor; and an optothermal converting agent selected from the group consisting of an infrared pigment and a carbon black; and
c) a free radical curable colour forming inkjet ink containing a free radical photoinitiator; a polymerizable compound including a free radical polymerizable monomer or oligomer having a carbon-over-oxygen ratio of at least 3.0; and an optothermal converting agent selected from the group consisting of an infrared pigment and a carbon black, wherein the carbon-over-oxygen ratio is defined as the number of carbon atoms over the number of oxygen atoms in the free radical polymerizable monomer or oligomer.

6. The inkjet ink set according to claim 5, wherein the leuco dye is a diffusion hindered compound by having at least one of the following properties:
a) the molecular weight of the leuco dye is larger than 500;
b) the leuco dye is selected from the group consisting of a polymerizeable leuco dye and a leuco dye covalently bonded to a polymer; and
c) the leuco dye is incorporated in the core of a capsule composed of a
polymeric shell surrounding a core.

7. The inkjet ink set according to claim 5 or 6, wherein the colour developing agent or a colour developing agent precursor is a diffusion hindered compound by having at least one of the following properties:
a) the molecular weight of the colour developing agent or the colour developing agent precursor is larger than 500;
b) the colour developing agent or the colour developing agent precursor is selected from the group consisting of a polymerizeable colour developing agent, a polymerizeable colour developing agent precursor, a colour developing agent covalently bonded to a polymer and a colour developing agent precursor covalently bonded to a polymer; and
c) the colour developing agent or the colour developing agent precursor is incorporated in the core of a capsule composed of a polymeric shell surrounding a core.

8. The inkjet ink set according to claim 6 or 7, wherein the leuco dye is physically separated from the colour developing agent or colour developing agent precursor by the polymeric shell of a capsule.

9. The inkjet ink set according to any one claims 5 to 8, wherein the free radical curable colour forming inkjet ink includes a white pigment.

10. The inkjet ink set according to any one of claims 5 to 9, wherein the one or more free radical UV curable pigmented colour inkjet inks or the free radical curable colour forming inkjet ink include at least one free radical photoinitiator selected from the group consisting of a thioxanthone photoinitiator, an acylphosphineoxide photoinitiator and a bisacylphosphineoxide photoinitiator.

11. The inkjet ink set according to any one of claims 5 to 10, wherein the at least one free radical photoinitiator is selected from the group consisting of a multifunctional free radical photoinitiator, an oligomeric free radical photoinitiator, a polymerizable free radical photoinitiator and a polymeric free radical photoinitiator.

12. The inkjet ink set according to any one of claims 5 to 11, wherein the one or more free radical UV curable pigmented colour inkjet inks or the free radical curable colour forming inkjet ink include at least 15 wt% of a polymerizable compound having an acrylate group and at least one second ethylenically unsaturated polymerizable functional group selected from the group consisting of a vinylether group, an allylether group and a allylester group.

13. The inkjet ink set according to any one of claims 5 to 12, containing two, three or more colour forming inkjet inks forming different colours upon heat treatment.

14. A packaging having an image including the inkjet inks of the inkjet ink set according to any one of claims 5 to 13.

15. The packaging according to claim 14, wherein the packaging is selected from the group consisting of food packaging, drink packaging, cosmetical packaging, and medical packaging.
